# DEMANDE DE BREVET EUROPEEN

(11) **EP 2 189 792 A2**
(43) Date de publication de la demande: **26.05.2010**
(21) Numéro de dépôt: 10155815.3
(22) Date de dépôt: 27.08.2004
(51) Int. Cl.: G01N 33/543, G01N 27/447, C12Q 1/68

(54) **Dispositif pour séparer et/ou analyser plusieurs cibles moléculaires en solution dans un mélange complexe**

(30) Priorité: 24.09.2003 FR 0311204
(62) Demande divisionnaire de: 04786364.2
(71) Demandeur: Commissariat à l'Energie Atomique, 75015 Paris (FR)
(72) Inventeur: Ugolin, Nicolas, 75002, PARIS (FR); Chevillard, Sylvie, 94270 LE KREMLIN-BICETRE (FR); Ory, Catherine, 75018, PARIS (FR); Lebeau, Jérôme, 75001 PARIS (FR)
(74) Mandataire: Desaix, Anne

(57) **Abrégé**

L'invention porte sur un dispositif permettant de séparer et/ou détecter plusieurs cibles moléculaires en solution dans un mélange complexe, ledit dispositif comprenant un jeu de particules magnétiques sur lesquelles est immobilisé l'ensemble des cibles représentatif d'un transcriptome à analyser, et un jeu de sondes.

## Description

L'invention porte sur un dispositif pour séparer et/ou analyser plusieurs cibles moléculaires en solution dans un mélange complexe, notamment des acides nucléiques ou des protéines. L'invention porte en particulier sur un dispositif comprenant une puce ou matrice organisée de sondes de bio polymères, pour la séparation ou l'analyse de cibles moléculaires. Un tel dispositif sépare et/ou détecte plusieurs cibles moléculaires en solution dans un mélange complexe. Selon un premier mode de réalisation de l'invention, un dispositif comprend :
a. une matrice de micro-colonnes comprenant N lignes et P colonnes de micro-colonnes disposées dans un même plan, chaque micro-colonne comportant un type de sonde moléculaire immobilisée susceptible de retenir (selon un mode de réalisation de l'invention, par liaison spécifique sonde/cible) une cible moléculaire spécifique présente dans le mélange complexe,
b. un premier réseau de capillaires situé dans un plan parallèle au plan de la matrice de micro-colonnes, au dessus de la matrice de micro-colonnes, ledit premier réseau permettant la circulation du mélange complexe introduit dans le dispositif vers chaque micro-colonne de la matrice telle que définie en a,
c. un second réseau de capillaires situé dans un plan parallèle au plan de la matrice de micro-colonnes, en dessous de la matrice de micro-colonnes, ledit second réseau permettant la circulation des cibles moléculaires après élution vers un ou plusieurs détecteur(s), permettant leur récupération et/ou leur analyse.
d. Le cas échéant, un détecteur permettant la récupération et/ou l'analyse des différentes cibles moléculaires, de préférence un sprectromètre de masse.

L'invention porte également sur un dispositif pour séparer et/ou détecter plusieurs cibles moléculaires en solution dans un mélange complexe, ledit dispositif comprenant
a. un réseau de capillaires permettant la circulation du mélange complexe introduit dans le dispositif,
b. deux jeux d'électrodes disposés de part et d'autre du réseau de capillaires :
   - un jeu d'électrodes fonctionnalisées, dont les électrodes sont greffées de sondes organisées en spots, chaque sonde est susceptible de retenir une cible moléculaire spécifique présente dans le mélange complexe, par liaison spécifique sonde/cible,
   - un jeu d'électrodes non fonctionnalisées.

L'invention concerne également les utilisations d'un tel dispositif, en particulier pour la séparation et/ou l'analyse de molécules d'ADN ou d'ARN contenues dans un échantillon biologique.

On sait déterminer la masse des macromolécules telles que l'ADN, l'ARN ou les protéines, à partir d'une analyse en spectrométrie de masse. Si l'analyse par ce procédé s'accompagne d'une décomposition ménagée des molécules, on peut également déterminer leur séquence. Toutefois, pour les mélanges de molécules de tailles et de séquences différentes, il devient difficile, voire impossible de discriminer entre les différentes molécules par cette technique.

Alternativement à la détection par spectrométrie de masse, d'autres méthodes sont utilisables.

Ainsi, la résonance plasmonique de surface (SPR) permet de déterminer la densité de matière accumulée à une petite distance (moins de 200nm) de la surface d'une lame de faible épaisseur (xnm) en métal à électron libre comme l'or ou le platine... En effet, la réflexion sur une des faces de la lame de métal est modifiée proportionnellement à la densité et à la quantité de matière se trouvant à proximité de l'autre face. Toutefois, il n'est pas réellement possible de distinguer entre les différents types de molécules contribuant à la modification de la réflexion. De plus, par cette méthode, la sensibilité de détection de la fixation des cibles sur les bio-puces est inférieure pour l'instant à la sensibilité atteinte en fluorescence avec des molécules marquées. La présence même des sondes sur la surface de métal diminue la sensibilité de détection en éloignant les cibles du métal. Lors des mesures dynamiques de l'interaction cible/sonde, la présence des molécules cibles libres à proximité de la surface fausse la mesure. La détection par les méthodes de SPR nécessite généralement pour être efficace une quantité de matériels plus importante que ne le feraient des méthodes de marquages fluorescentes ou radioactives. De ce fait la détection par SPR est encore incompatible avec un certain nombre d'expérimentations, notamment dans le cadre de diagnostics.

Par ailleurs, on peut recourir à la mesure de la variation d'impédance existant entre différents états de molécules.

Une molécule d'ADN simple brin d'une séquence donnée n'a pas la même impédance que le complexe apparié double brin correspondant. Cette propriété est utilisée sur les puces à ADN pour évaluer la proportion d'hybridation donc le nombre de complexes sonde-cible formés sur une biopuce. D'une manière générale, les variations d'impédance peuvent être utilisées pour étudier les interactions inter-moléculaires telles que la fixation d'un ligand sur son récepteur, mais aussi les interactions entre des molécules d'ADN ou de protéines avec une drogue, un ion... Toutefois pour les bio-puces, cette méthode de détection est limitée :
1) Par la difficulté à réaliser des puces à hautes densités, de plus de 2000 spots. En effet, à cause de la taille des électrodes et de la géométrie de la connectique utilisée pour réaliser les puces à impédance, la surface d'hybridation devient très grande dès que le nombre de spots dépasse 800. Or une grande surface d'hybridation implique un volume de l'échantillon qui doit couvrir la surface d'hybridation important, d'où la nécessité d'une grande quantité de matériel biologique pour atteindre la concentration minimale pour la détection. Ceci est incompatible avec les expériences où peu de matériel est disponible tel que pour les diagnostics.
2) Par les changements de conformation des molécules étudiées (sonde et/ou cible) qui entraînent des artéfacts de mesure rendant ininterprétables les variations d'impédance mesurées. Par exemple, les déformations de l'ADN dues à la séquence ou les hybridations intra-moléculaires provoquent des variations d'impédance du même ordre de grandeur que pour l'hybridation.

Des transistors à effet de champs sont utilisés dans l'art antérieur comme amplificateurs de courant pour mesurer la variation d'impédance liée à l'hybridation de la molécule d'ADN (ref.). Le greffage des sondes est réalisé au niveau de la grille du transistor. Lorsque les cibles viennent se fixer, elles modifient l'impédance de la grille ce qui entraîne une modification du courant entre la source (entrée du transistor) et le drain sortie du transistor. Aucune organisation en réseau n'a cependant été décrite pour ce type de détecteur. Le fait d'utiliser le transistor à effet de champs comme amplificateur de courant limite la fréquence des courants alternatifs utilisables pour mettre en évidence les variations d'impédance liées à l'hybridation, limitant dès lors la sensibilité du détecteur. De plus dans ces descriptions antérieures, la grille contrôle le passage du courant dans le transistor, et le fait d'y greffer les sondes, supprime la possibilité d'utiliser les différentes bornes du transistor comme électrodes pour contrôler le mouvement des cibles donc pour diriger l'hybridation en concentrant les cibles au niveau des sondes.

Les matrices organisées de sondes de biopolymères (puces à ADN, puces à protéine, etc...) permettent de séparer de manière qualitative et quantitative les biopolymères présents dans un mélange et cela théoriquement, quels que soient leurs nombres, leurs séquences et leurs complexités. Cependant, les réseaux d'acides nucléiques par exemple, ne permettent pas de compter de manière absolue et précise le nombre de molécules hybridées. De plus, avec la technologie disponible actuellement, la détection des bio-polymères sur biopuces (« micro-arrays ») est indirecte, nécessitant une étape de marquage de ceux-ci (fluorescence, radioactivité ...). Si les rendements d'incorporation dans les biopolymères de résidus radiomarqués et de résidus froids sont quasiment les mêmes, il n'en va pas de même avec les marqueurs fluorescents (Martinez et al. - Nucl. Acids. Res. 2003 31: p.18 ; Hoen et al. - Nucleic Acids Res. 2003 Mar 1;31 (5) ; p. 20.). Ces problèmes de marquages sont notamment rencontrés pour la synthèse des molécules d'ADNc incorporant les marqueurs fluorescents CY3 et CY5. L'encombrement stérique résultant de ce dernier type de marquage peut en outre fortement modifier les cinétiques et les équilibres stoechiométriques des réactions (hybridation, réaction anticorps-antigène, réaction cible-ligand en général...). Ces problèmes d'encombrements stériques sont éliminés avec l'emploi d'isotopes radioactifs; toutefois les isotopes radioactifs impliquent une gestion des déchets radioactifs. En outre, les technologies de détection de molécules marquées radioactivement, c'est à dire essentiellement de type phosphorimager pour la radioactivité (Bertucci F et al. - Hum Mol Genet. 1999 Sep; 8(9): 1715-22. Erratum in: Hum Mol Genet 1999 Oct;8(11); p. 2129.), et les différents types de scanner pour la détection de la fluorescence présentent un certain nombre de limites quant à la quantité de matériel biologique à hybrider sur une puce pour atteindre les seuils de détection et de reproductibilité des mesures effectuées. De fait, il n'est pas possible de détecter des molécules présentes à quelques copies par cellule à partir d'échantillons présentant un faible nombre de cellules (∼1 000 cellules), ce qui correspond néanmoins à une situation fréquente pour les prélèvements cliniques.

Une alternative à l'utilisation de puce ADN classique consiste à fonctionnaliser l'intérieur d'un capillaire avec des sondes disposées en couronnes tout le long, chaque couronne étant constituée d'un type de sonde spécifique à un gène. Le petit diamètre du capillaire (∼100µm) permet de diminuer théoriquement le volume de l'échantillon analysable donc d'atteindre la concentration détectable par la fluorescence par exemple avec une plus faible quantité de matériels biologiques marqués. Toutefois, même en diminuant le volume de la réaction, la concentration de chaque cible qui s'hybride au niveau d'une couronne de sondes est dépendante de l'ensemble du volume du capillaire. Plus le nombre de sondes augmente, plus la longueur de capillaire doit être importante et plus la quantité de matériel (par exemple d'échantillon à analyser) nécessaire pour atteindre une concentration détectable est importante (le volume du capillaire étant proportionnel à la longueur). Les problèmes liés au marquage des échantillons demeurent les mêmes avec l'utilisation des capillaires. De plus la fabrication d'un capillaire fonctionnalisé avec un grand monde de sondes différentes est compliquée et coûteuse.

Enfin, les puces à ADN ou à protéines décrites dans l'état de la technique sont généralement à usage unique, ce qui génère des coûts d'utilisation très élevés pour chaque point expérimental. Cette unicité d'utilisation limite grandement la généralisation de ces techniques aux études et tests cliniques en vue de la réalisation de diagnostics.

La présente invention fournit un dispositif permettant de séparer et/ou d'analyser des cibles moléculaires spécifiques présentes dans un mélange complexe et notamment des bio-polymères tels que des molécules d'ARN, d'ADN ou des protéines. Le dispositif de l'invention est réutilisable pour un grand nombre d'expériences et permet de mesurer des concentrations de produit de l'ordre de l'attomole (10⁻¹⁸) voire de la zeptomole (10⁻²¹). Ces limites peuvent permettre d'identifier des molécules présentes à une seule copie par cellule à partir d'un nombre limité de cellules, par exemple d'un millier voire d'une centaine de cellules. En outre, selon certains modes de réalisation de l'invention, le dispositif permet de réaliser des analyses comparatives, et donc d'analyser plusieurs échantillons simultanément. Selon un autre mode de réalisation, le dispositif permet de déterminer directement la séquence des acides nucléiques ou des protéines retenus par les sondes, par exemple au niveau de chaque micro-colonne de la matrice ou du spot d'hybridation sur la matrice.

Un premier aspect de l'invention porte donc sur un dispositif pour séparer et/ou analyser plusieurs cibles moléculaires en solution dans un mélange complexe, ledit dispositif comprenant :
a. une matrice de micro-colonnes comprenant N lignes et P colonnes de micro-colonnes disposées dans un même plan, chaque micro-colonne comportant un type de sonde moléculaire immobilisée susceptible de retenir une cible moléculaire spécifique présente dans le mélange complexe, par liaison spécifique sonde/cible,
b. un premier réseau de capillaires situé dans un plan parallèle au plan de la matrice de micro-colonnes, au dessus de la matrice de micro-colonnes, ledit premier réseau permettant la circulation du mélange complexe introduit dans le dispositif vers chaque micro-colonne de la matrice telle que définie en a,
c. un second réseau de capillaires situé dans un plan parallèle au plan de la matrice de micro-colonnes, en dessous de la matrice de micro-colonnes, ledit second réseau permettant la circulation des cibles moléculaires après élution vers un ou plusieurs détecteur(s), permettant leur récupération et/ou leur analyse.
d. Le cas échéant, un détecteur permettant la récupération et/ou l'analyse des différentes cibles moléculaires, de préférence un sprectromètre de masse.

Le cas échéant, des systèmes d'électrodes permettent de piloter, de déplacer les cibles dans les réseaux.

Par le terme « capillaire », il faut comprendre tout canal approprié pour permettre la circulation de fluides, d'un diamètre inférieur à 1 millimètre, de préférence compris entre 1 et 100 µm.

Au sens de l'invention, on entend par « séparation de cibles moléculaires dans un mélange complexe », l'opération qui permet d'obtenir dans des volumes distincts des solutions enrichies en molécules spécifiques, ou cibles moléculaires, présentes initialement dans un mélange complexe. Par « enrichies », il faut comprendre que les cibles moléculaires représentent au moins 50% des molécules présentes dans la solution, obtenues après séparation, de préférence 80% et de façon encore plus préférée, au moins 90%.

On entend par « analyse des cibles moléculaires », l'opération qui consiste à identifier la présence de la cible moléculaire (détection) et/ou la quantité relative ou absolue de cette cible moléculaire dans le mélange complexe à analyser (dosage).

Par l'expression « mélange complexe », il faut comprendre au sens de l'invention une solution contenant un grand nombre de molécules de structures différentes, en particulier un mélange de plus de 100 molécules ayant des structures différentes. Le dispositif de l'invention est plus préférentiellement destiné à la séparation et/ou l'analyse de molécules biologiques (ou biomolécules), contenues notamment dans un échantillon d'origine biologique.

Plus particulièrement, il peut s'agir d'un échantillon issu d'un prélèvement de tissus ou d'un fluide biologique tel que le sang, le plasma, le liquide céphalo-rachidien, l'urine ou la salive. Le prélèvement peut être réalisé sur un animal (en particulier un mammifère et de préférence chez l'homme). Le prélèvement peut en particulier être réalisé chez un individu sain ou un patient atteint d'une pathologie. La pathologie peut notamment être un cancer, une pathologie neuro-dégénérative, une pathologie infectieuse et en particulier une pathologie virale, bactérienne ou parasitaire. L'échantillon peut également contenir un extrait tissulaire ou un extrait cellulaire, issu de cellules eucaryotes ou procaryotes, de bactéries, de champignons ou de levures, notamment de cellules en cultures ou de cellules prélevées dans l'environnement extérieur. L'échantillon peut aussi être obtenu à partir d'un prélèvement fait sur un végétal. Il peut aussi s'agit d'un prélèvement effectué sur un produit agro-alimentaire, notamment sur des aliments cuisinés, ou à partir de graines, de fruits ou de céréales.

Le dispositif peut ainsi être employé dans des applications diverses, notamment dans le diagnostic médical ou le contrôle qualité agro-alimentaire, ou encore toute analyse biologique, dans les domaines notamment de l'écologie, de l'archéologie ou de la criminologie.

Chaque micro-colonne du dispositif selon l'invention comprend une loge de forme quelconque par exemple de forme tubulaire ayant de préférence un diamètre de 2 à 1000 µm, de préférence de 20 à 100 µm, et une longueur de 2 à 2000 µm, de préférence de 40 à 200 µm.

Chaque loge est connectée par une première extrémité à un capillaire du premier réseau de capillaires et à un capillaire du second réseau de capillaires par son extrémité opposée, de sorte qu'il est possible de faire traverser l'ensemble des loges par un flux circulant dans le réseau de capillaires.

Le dispositif est généralement constitué d'une matrice de N lignes et de P colonnes de loges disposées dans un même plan. Les loges peuvent avoir n'importe quelle inclinaison par rapport à ce plan mais sont de préférence parallèles ou perpendiculaires au plan de la matrice pour des raisons pratiques. Pour des raisons d'encombrement, les loges peuvent être disposées en quinconce une ligne sur deux.

Les loges peuvent notamment être creusées ou moulées dans l'épaisseur d'une surface d'un matériau approprié à la réalisation du dispositif de l'invention, tel que le verre, le silicium, le plastique, le Kapton, le carbone, l'or ou tout autre matériau, formant le plan de la matrice.

La matrice de micro-colonnes selon le dispositif de l'invention est ainsi constituée d'un grand nombre de loges, par exemple de 1 à un million de loges, de préférence de 100 à 100000 loges, permettant ainsi la séparation et/ou l'analyse d'autant de cibles moléculaires spécifiques susceptibles d'être contenues dans un même échantillon.

Les sondes moléculaires sont disposées et immobilisées dans chaque loge, de préférence, à raison d'une sonde de spécificité particulière dans chaque loge, formant ainsi des micro-colonnes de chromatographies, susceptibles de retenir chacune une cible moléculaire spécifique.

Le terme « immobilisées » signifie, au sens de l'invention, que les sondes sont maintenues dans les loges, notamment en présence d'un champ électrique, magnétique ou d'un flux circulant préalablement injecté dans le réseau de capillaires entrant du dispositif lorsque celui-ci traverse la micro-colonne contenant les sondes moléculaires.

Le dispositif se compose ainsi d'une matrice de micro-colonnes où chaque micro-colonne comporte une grande quantité (par exemple de 10⁶ à 10¹⁰) de sondes d'une même spécificité, immobilisées et aptes à lier spécifiquement dans des conditions appropriées des cibles moléculaires correspondantes. Ces sondes sont référencées ci-après par le terme « sondes moléculaires ». Le terme « liaison spécifique » en référence à la liaison d'une sonde avec une cible contenue dans le mélange complexe, signifie que la sonde se lie avec une cible particulière mais ne se lie pas de manière significative avec les autres molécules, et plus particulièrement les autres cibles présentes dans le mélange complexe.

Des couples sondes-cibles préférés, sont notamment les acides nucléiques hybridant avec des séquences complémentaires tels que des molécules d'ARN messagers, d'ADN ou d'ADNc hybridant avec des sondes d'oligonucléotides spécifiques, des antigènes reconnaissant spécifiquement des sondes constituées d'anticorps ou leurs fragments fonctionnels, ou tout couple récepteur-ligand ou vice-versa.

L'homme du métier pourra adapter ledit dispositif pour la séparation et/ou l'analyse de tout type de molécules dès lors qu'il est possible de leur associer une entité les reconnaissant spécifiquement, constituant une sonde moléculaire, les molécules cibles étant capables de se lier spécifiquement à ladite sonde moléculaire immobilisable sur un support.

L'immobilisation des sondes dans chacune des loges pourra être obtenue par exemple à l'aide d'une interaction forte avec un élément qui ne peut pas sortir de la loge. Le mode de couplage consistera par exemple en une immobilisation des sondes sur la paroi interne de la loge, notamment par liaison covalente ou toute autre interaction forte.

Alternativement, les sondes moléculaires peuvent être fixées sur des particules dont la structure est telle qu'elles ne peuvent s'échapper de leur loge (Huang et al. - Anal. Chem. ; 2002; 74(14); p. 3362-3371 ; Ugolin et al. - FR 0015398 novembre 2000). Le diamètre moyen des particules sera par exemple supérieur au diamètre des capillaires à l'entrée et à la sortie de chaque micro-colonne. La rétention des particules dans la loge peut éventuellement se faire par interaction magnétique entre les particules et une partie de la paroi interne de la loge, si les particules sont capables de subir ou de fournir une attraction magnétique et si une partie de la paroi de la loge est inversement capable de fournir ou de subir une attraction magnétique.

Dans un mode de réalisation particulier, les sondes moléculaires sont immobilisées dans un gel contenu dans chaque loge, empêchant la migration desdites sondes moléculaires hors de la micro-colonne. Les sondes moléculaires sont par exemple retenues par interaction forte ou liaison covalente avec les molécules formant le gel.

Dans un mode de réalisation préféré, chaque loge est remplie d'un gel et les sondes moléculaires sont couplées à des particules dont le diamètre est supérieur à la taille du maillage du gel, permettant l'immobilisation des particules dans les micro-colonnes et de ce fait, l'immobilisation des sondes moléculaires qui leurs sont couplées.

Toute méthode appropriée pour coupler les sondes moléculaires aux particules ou à la paroi interne de la loge peut être utilisée. A titre d'exemples, on citera en particulier le couplage non covalent de type biotine-avidine entre des sondes moléculaires couplées à la biotine et des billes fonctionnalisées avec l'avidine, telles que celles commercialisées par « dynal » (Dynal distributors worldwide, copyright 1996 Dynal AS - Techinical Handbook second edition).

D'une manière générale, tous les types de couplages, liaisons chimiques, interactions fortes décrits pour les colonnes de chromatographie peuvent éventuellement convenir.

Les sondes peuvent en particulier être fixées directement sur les polymères d'un gel contenu dans chaque micro-colonne.

Dans un autre mode de réalisation, notamment, dans le cas où la sonde est un acide nucléique, pour le couplage covalent de ces sondes à une particule, il est possible de synthétiser un hétéro-polymère polyX/sonde tel que le poly-pyrole/acide nucléique. En effet, les sondes moléculaires d'acides nucléiques liées au pyrole en 5' ou en 3' ont la particularité de polymériser avec des molécules de pyrole libres, formant ainsi un hétéro-polymère, les hétéro-polymères de taille suffisamment importante pouvant jouer le rôle des particules décrites ci-dessus.

Une autre alternative est l'utilisation de sondes d'acides nucléiques liées en 5' et/ou en 3' à des agents pontants tels que les psoralènes. Les séquences des sondes peuvent se présenter sous la forme : psoralène 5'(Y1)Xn(Y2)3'. Xn représente la sonde proprement dite et Y1 et Y2 sont des séquences choisies telles que les sondes puissent se concaténer sans limite les unes aux autres par complémentarité. En exemple, les sondes à polymériser pourront être constituées d'un mélange équimolaire de psoralène 5'(T)mXn(A)m3' avec m=5. Sous l'action de rayons ultraviolets, les sondes se polymérisent en une macro molécule (poly 5'(T)mXn(T)m3psoralène3'(A)m(X)n(A)m5' ...) qui peut être retenue dans chaque loge.

Dans le cas d'une fixation des sondes directement à la paroi de la loge, tous les types d'interactions décrits ci-dessus peuvent également convenir. En particulier, les interactions utilisées couramment dans les puces à ADN pour fixer les sondes d'acide nucléique, ou les puces à protéines pour fixer les sondes de polypeptides peuvent également être adaptées (interaction électrostatique lysine/acide nucléique, fixation silane, polymérisation du pyrole sur la surface de la loge, fixation psoralène, etc...), de même que les méthodes de synthèse *in situ* sur des billes ou la paroi des loges. Il pourra également être envisagé l'utilisation de nylon ou de la nitro-cellulose pour fixer les sondes de façon irréversible sur des particules ou les parois des loges (particules ou parois qui sont alors réalisées dans ces matériaux). La fixation peut être directe ou se faire par l'intermédiaire d'un pontage tel qu'un pont psoralène entre une particule de nylon et la sonde moléculaire.

Dans un mode de réalisation particulier, il peut également être envisagé de réaliser une rétention mécanique des sondes moléculaires couplées aux particules dans la loge, par l'utilisation de filtres percés de pores de diamètre suffisamment petit (par exemple, un diamètre inférieur au diamètre des particules filtrées). De tels filtres sont couramment utilisés et commercialisés (filtre téflon etc...).

L'immobilisation des sondes moléculaires sur leur support doit être suffisamment forte pour résister aux différents traitements appliqués et aux éventuels champs électriques utilisés pour manipuler les cibles.

Lorsque le dispositif de l'invention comprend un ou deux réseaux de capillaires reliés à des électrodes permettant de contrôler l'élution et/ou la migration des cibles à analyser, les sondes peuvent être fixées sur les électrodes par tous les procédés de chimie décrits pour fixer les sondes sur un support de biopuce. Dans le cas d'électrodes en ITO (ou tout autre alliage transparent, ATO, ZNO, FTO), il est possible de réaliser un dépôt direct des sondes possédant un groupement hydrophile tel que PO3-comme c'est le cas pour les acides nucléiques.

Il est nécessaire d'isoler les parties des électrodes qui n'ont pas reçu de greffage de sonde, par un procédé d'encapsulation. Par exemple, un film de poly-pyrrole peut être utilisé. Le film est réalisé en mettant les électrodes greffées sous tension en présence d'une solution de pyrrole. Le pyrrole polymérise spontanément sous l'action du courant et isole les parties libres des électrodes. Après le greffage des sondes, les électrodes peuvent également être saturées par un oligonucléotide monotone (exemple poly A) qui ne peut pas s'hybrider avec les cibles.

L'invention concerne un procédé de fixation d'un polymère d'acide nucléique sur une électrode en ITO par adsorption directe.

Lorsque le dispositif comporte deux réseaux de capillaires, il permet la circulation du mélange à analyser à travers l'ensemble des micro-colonnes. Les cibles correspondantes sont retenues spécifiquement sur chaque micro-colonne. Elles sont ensuite éluées, c'est à dire détachées des sondes moléculaires auxquelles elles étaient liées spécifiquement, puis migrent vers un ou plusieurs détecteurs en gagnant le réseau de capillaires à la sortie des micro-colonnes.

Compte tenu du grand nombre de micro-colonnes, on comprend aisément qu'il peut être avantageux pour une analyse séquentielle des cibles de pouvoir contrôler séparément l'élution et/ou la migration au niveau de chaque micro-colonne ou au moins de groupes distincts de micro-colonnes, par exemple ligne par ligne dans le cas d'une matrice de N*P micro-colonnes, comme décrit en exemple préféré.

Les réseaux de capillaires sont par exemple creusés ou moulés dans des matériaux tels que la silice, les plastiques (plexiglass par exemple) selon des techniques d'érosion à l'acide pour la silice ou d'usinage au laser pour les plastiques, connues de l'homme du métier.

Dans un mode de réalisation préféré, chaque réseau de capillaires est creusé dans l'épaisseur d'une plaque d'un matériau approprié. Le dispositif comprend alors la matrice de micro-colonnes et les deux plaques sur lesquelles sont creusés les réseaux de capillaires accolées sur chacune des faces de la matrice (Kuo et al. - Anal. Chem. ; 2003; 75(10); p. 2224-2230; Kuo et al. - Anal. Chem. ; 2003; 75(8); p. 1861-1867).

Dans un mode de réalisation spécifique, le dispositif selon l'invention tel que décrit précédemment est **caractérisé en ce qu**'il comprend des moyens permettant de contrôler au niveau d'une ou plusieurs micro-colonnes spécifiques de la matrice, l'élution des cibles moléculaires et/ou leur migration vers un détecteur et/ou leur rétention dans les micro-colonnes après élution.

Par « élution », on entend l'opération consistant à rompre la liaison spécifique établie entre la cible et la sonde.

Au sens de l'invention, par contrôle de l'élution et/ou de la migration des cibles au niveau de micro-colonnes spécifiques, il faut comprendre que le dispositif permet de choisir les micro-colonnes pour lesquelles les cibles seront éluées ou migreront vers le détecteur, les autres cibles n'étant pas éluées ou étant retenues dans les micro-colonnes, malgré la présence éventuelle d'un flux traversant lesdites micro-colonnes.

Dans la mesure où il est alors possible d'analyser séparément les cibles éluées de chaque micro-colonne ou d'un groupe de micro-colonnes en utilisant le même dispositif d'analyse, le dispositif selon ce mode de réalisation permet en particulier de limiter le nombre de détecteurs utilisés.

Dans un mode de réalisation particulier, lorsque les cibles moléculaires sont des molécules chargées, par exemple des acides nucléiques, il est possible de contrôler l'élution et/ou la migration de ces cibles en appliquant un champ électrique, par exemple au moyen de jeux d'électrodes disposées au contact de chaque micro-colonne et en sortie de chaque micro-colonne. Les électrodes au niveau de chaque loge peuvent être indépendantes les unes des autres (multiplexage loge par loge) ou organisées en groupes d'électrodes formant chacun une unité de potentiel pour un groupe de loges.

Ainsi, dans un mode de réalisation spécifique, le dispositif selon l'invention comprend une électrode, dite électrode loge ou médiante, disposée au contact de chaque micro-colonne, de préférence médiante à la micro-colonne, et une deuxième électrode, dite électrode distale, disposée en sortie de chaque micro-colonne, permettant le contrôle de l'élution des cibles moléculaires retenues dans une ou plusieurs micro-colonnes spécifiques et/ou leur migration vers le détecteur ou leur rétention dans les micro-colonnes après élution.

Les électrodes loges sont disposées de façon à retenir des molécules chargées dans la micro-colonne après l'élution par des interactions électriques puis à permettre leur migration sélective. Lorsque les loges sont de forme tubulaire, elles sont par exemple disposées au contact des parois latérales des loges.

Dans la mesure où le dispositif permet l'élution et/ou la migration séparée des cibles moléculaires vers un détecteur, le dispositif peut comprendre un réseau de capillaires approprié permettant notamment la convergence des cibles moléculaires en sortie des micro-colonnes vers un nombre restreint de détecteurs, voire un détecteur unique.

Aussi, dans un mode de réalisation préféré, le dispositif selon l'invention est **caractérisé en ce que** le premier réseau de capillaires desservent l'entrée des micro-colonnes comprend un premier capillaire transversal dans lequel est introduit le mélange complexe, appelé ci-après canal transversal supérieur, d'un diamètre de préférence compris entre 2 et 1000 µm, connecté à un ensemble de capillaires desservant les micro-colonnes de la matrice et en ce que le second réseau de capillaires desservent la sortie des micro-colonnes comprend un ensemble de capillaires reliant les micro-colonnes à un ou plusieurs capillaires transversaux, appelés canaux transversaux inférieurs, d'un diamètre de préférence compris entre 2 et 1000 µm, ces derniers étant reliés à un ou plusieurs détecteurs.

Les canaux transversaux inférieur et supérieur sont de préférence chacun reliés à une électrode, permettant d'appliquer une différence de potentiel électrique entre le lieu d'introduction du mélange complexe à analyser et le détecteur, et permettant ainsi d'assurer la migration de molécules chargées dans l'ensemble du dispositif, notamment d'acides nucléiques contenus dans le mélange complexe à analyser par électrophorèse.

Dans un mode de réalisation particulièrement préféré, le dispositif selon l'invention est **caractérisé en ce que** la matrice de micro-colonnes comprend N lignes et P colonnes de micro-colonnes disposées dans un même plan et en ce qu'il comprend des moyens permettant de contrôler l'élution des cibles moléculaires retenues sur les micro-colonnes d'une ligne spécifique et/ou leur migration vers le détecteur et/ou leur rétention dans les micro-colonnes après élution, et en ce que la longueur de chaque capillaire du second réseau est choisie de façon à ce que la distance entre la sortie d'une micro-colonne et le canal transversal inférieur est différente d'un capillaire du second réseau à l'autre, de préférence croissante ou décroissante du capillaire reliant la première micro-colonne d'une ligne au capillaire reliant la dernière micro-colonne de cette ligne, de sorte que les temps de parcours des cibles moléculaires en sortie de micro-colonne jusqu'au détecteur sont différents pour chaque micro-colonne d'une même ligne.

A titre d'exemple, afin d'obtenir des temps de migration différents pour les cibles issues de chaque micro-colonne d'une même ligne, le réseau de capillaires reliant chaque micro-colonne au canal transversal inférieur peut comprendre P capillaires parallèles, chaque capillaire reliant les P micro-colonnes d'une même ligne de la matrice au canal transversal inférieur et formant un angle avec ledit canal transversal inférieur différent de 90°. Pour marquer encore plus le retard, les portions des capillaires situées entre les dernières lignes de loges et le canal transversal suivent des parcours non linéaires.

Les temps de migration des différentes cibles permettent d'identifier la micro-colonne dont les cibles proviennent et donc d'identifier la cible en question par la sonde moléculaire contenue dans la micro-colonne. Le diamètre des capillaires et la densité des éventuels gels utilisés à l'intérieur de ceux-ci sont donc choisis de façon à ne pas discriminer les molécules migrantes sur un critère de taille, le temps de migration dépendant uniquement du parcours effectué. Toutefois, la densité des gels peut éventuellement être choisie pour réaliser des chromatographies par électrophorèse capillaire. Des molécules de tailles diverses ou avec un petit polymorphisme de séquences tel qu'elles s'hybrident sur la même sonde, sont ainsi retardées différemment par un gel approprié lors de leur migration.

De manière préférentielle, le canal transversal inférieur ainsi que les différentes portions du second réseau de capillaires de distance différente sont remplis de gel. De ce fait, il y aura migration rapide des cibles jusqu'aux différentes portions des capillaires du second réseau où elles seront chromatographiées.

Afin de contrôler l'élution et/ou la migration des cibles pour chaque ligne de micro-colonnes du dispositif, l'ensemble des P micro-colonnes d'une même ligne peut être relié à une même électrode, le dispositif de l'invention comprenant ainsi N électrodes lignes (électrodes lignes loges), de préférence médiantes aux micro-colonnes, et une deuxième série d'électrodes, parallèles aux électrodes lignes (électrodes lignes distales), reliant l'ensemble des P capillaires en sortie des micro-colonnes d'une même ligne.

On obtient ainsi un réseau d'électrodes lignes loges ou médiantes : une électrode par ligne de la matrice de micro-colonnes. Ces électrodes, en plus de permettre la nano-manipulation des cibles dans chacune des loges, peuvent catalyser la fixation de sondes, telles que des sondes liées au pyrol qui se fixent au niveau de chacune des électrodes sous l'effet d'un champ électrique. Le deuxième jeu d'électrodes lignes distales, miroir des électrodes lignes loges, est disposé en sortie des loges de la matrice de micro-colonne. Les couples d'électrodes lignes définissent des unités de potentiel de la matrice des N*P micro-colonnes. Ces couples d'électrodes permettent d'appliquer le potentiel souhaité au niveau de chaque ligne de micro-colonnes.

Selon un mode de réalisation préféré du dispositif, le premier et le second réseau de capillaires sont situés dans des plans parallèles au plan de la matrice de micro-colonnes, de préférence respectivement au dessus et en dessous du plan formé par la matrice de micro-colonnes, et le premier réseau de capillaires, appelé réseau supérieur, comprend N capillaires parallèles, chaque capillaire reliant le canal transversal supérieur aux P microcolonnes d'une même ligne de la matrice, et le second réseau de capillaires, appelé réseau inférieur comprend P capillaires parallèles, chaque capillaire reliant les N micro-colonnes d'une même colonne de la matrice au canal transversal inférieur, l'angle formé entre les deux réseaux de capillaires inférieur et supérieur étant différent de 0°, de préférence 90°. De ce fait chaque capillaire du réseau supérieur est connecté avec tous les capillaires du réseau inférieur par une ligne de P loges de la matrice de micro-colonnes. Réciproquement, chaque capillaire du réseau inférieur est connecté à tous les capillaires du réseau supérieur par une colonne de N loges de la matrice de micro-colonnes.

Dans un mode de réalisation particulier comprenant une telle matrice de N*P micro-colonnes, les extrémités des capillaires du réseau supérieur opposées à un canal transversal supérieur, s'arrêtent de préférence à la dernière connexion avec les P ièmes et dernières micro-colonnes des lignes de la matrice de micro-colonnes et les extrémités des capillaires du réseau inférieur opposées à un canal transversal inférieur, s'arrêtent de préférence à la dernière connexion avec les Nièmes et dernières loges des colonnes de micro-colonnes de la matrice de micro-colonnes.

Dans un autre mode de réalisation, l'extrémité des capillaires du réseau de capillaires inférieurs opposés au canal transversal est reliée à un deuxième capillaire transversal (canal transversal inférieur secondaire), ce canal permet l'établissement d'un flux entre les deux réseaux de capillaires inférieurs et supérieurs à travers la matrice de micro-colonne, ceci permet d'accélérer et de contrôler plus finement la migration dans le réseau de capillaires inférieur. En effet si le canal transversal inférieur principal est rempli d'un gel afin de réaliser à ce niveau une micro électrophorèse capillaire, il est alors toujours possible d'établir un flux en cycle fermé entre le canal transversal supérieur et le canal transversal inférieur secondaire.

De manière générale, les réseaux de capillaires peuvent être remplis de gel tel qu'un gel de polyacrylamide ou tout autre gel permettant de réguler les flux et de contrôler la diffusion des molécules lors de leur migration, notamment les gels liquides utilisés pour les électrophorèses capillaires.

Dans un mode de réalisation particulier du dispositif contenant une matrice de N*P micro-colonnes, les canaux transversaux supérieur et inférieur sont munis d'un piston, fileté ou non, permettant de sélectionner le nombre de lignes de micro-colonnes à travers lesquels le flux peut passer. En reculant, le piston mobilise de plus en plus de lignes de micro-colonnes de la matrice.

En réalisant un piston creux muni d'une fente, il est possible éventuellement de mobiliser les lignes de micro-colonne une à une.

Dans un mode de réalisation spécifique, la mise en circulation des cibles durant la phase d'hybridation se fait sans flux, en établissant un champ électrique alternatif entre les électrodes des canaux transversaux supérieur et inférieur et les électrodes lignes successives. Ce champ permet de mélanger régulièrement les cibles non hybridées pour homogénéiser la solution d'hybridation. En plus, en réglant la force du champ électrique, il est possible de contrôler la spécificité de l'hybridation (Cluzel P. 1996. Science, Vol. 2071 (5250) pp 792-794).

Une alternative plus simple à l'utilisation d'un double réseau de capillaires superposé consiste à utiliser un simple réseau et un jeu de couples d'électrodes lignes pour constituer le dispositif de l'invention.

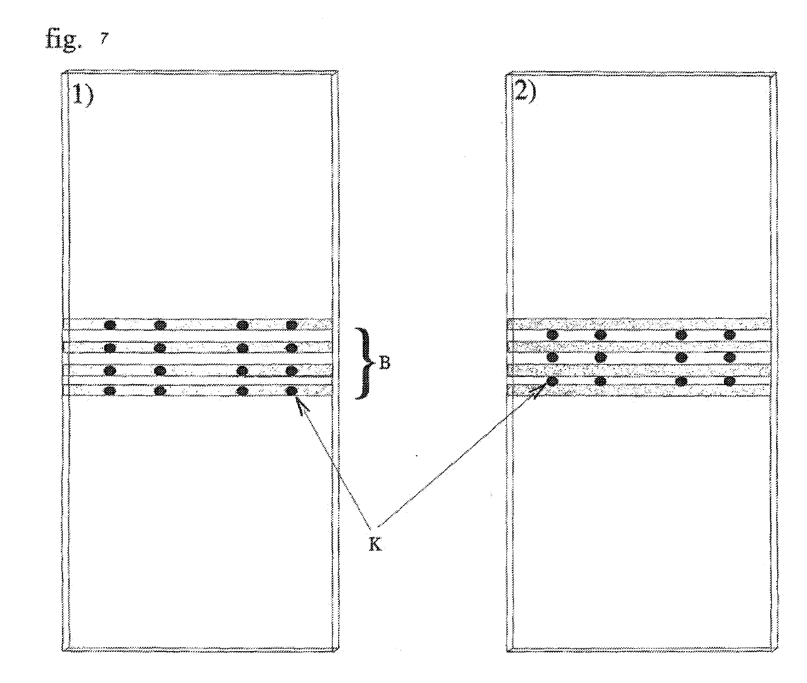

Le dispositif se présente alors sous la forme d'une matrice de sondes organisées en spots (correspondant à une unité d'hybridation), où chaque spot est constitué d'un type de sonde moléculaire par exemple un type de polymère d'acide nucléique dont la séquence est spécifique à un gène (il pourra s'agir pour les protéines d'un type d'anticorps ou d'un ligand particulier). Chaque ligne de spots de la matrice est déposée sur une surface d'or ou ITO (ou tout autre métal ou alliage adéquat) délimitant une électrode, l'ensemble de la matrice étant alors constitué de n électrodes correspondant au nombre n de lignes, chaque électrode ligne comportant P spots de sondes greffés (cf fig 7). Les électrodes sont gravées par couche mince sur un matériau isolant comme le verre, le kapton , l'oxyde d'alumine ... (cf schema).

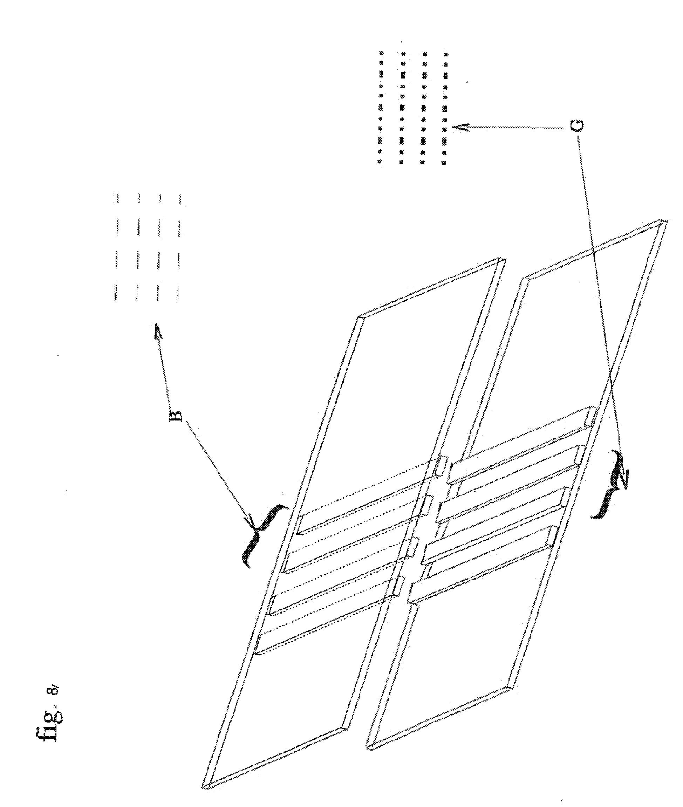

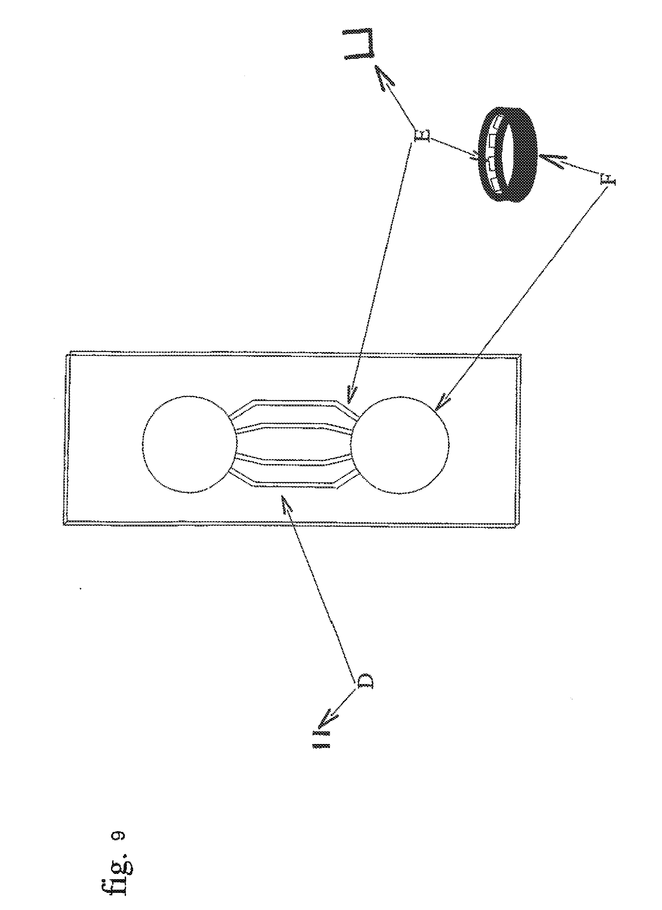

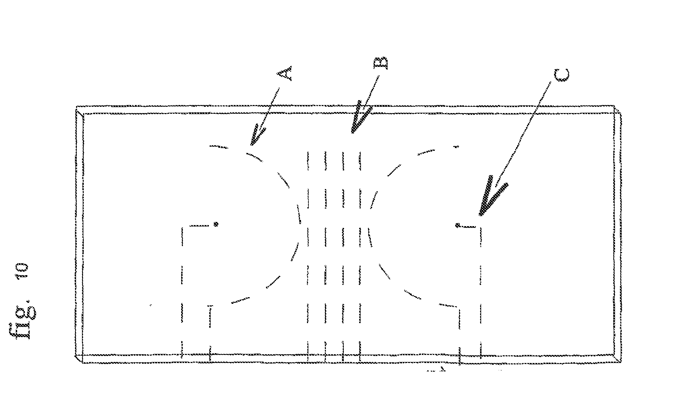

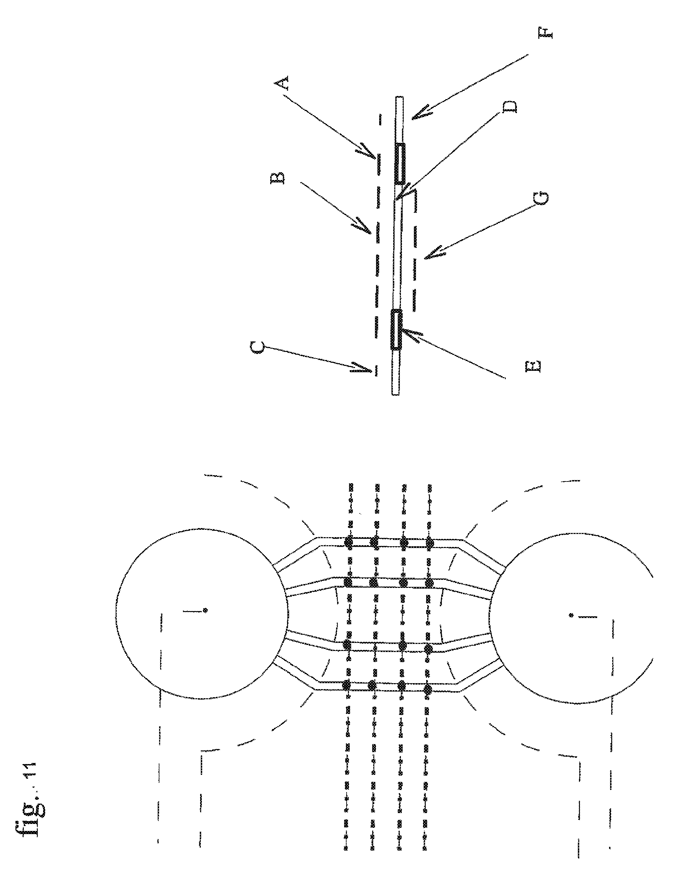

Un deuxième jeu d'électrodes, miroir du premier est réalisé, mais cette fois les électrodes ne sont pas greffées avec des sondes, ces électrodes sont dites non fonctionnalisées. Les deux jeux d'électrodes sont disposés en vis-à-vis de part et d'autre d'un réseau de P capillaires parallèles, de telle sorte qu'il y ait un jeu d'électrodes au-dessus et l'autre en dessous (Fig. 8 et 9). Le premier jeu d'électrodes fonctionnalisées possède des électrodes greffées de sondes organisées en spots, chaque sonde étant susceptible de retenir une cible moléculaire spécifique lorsqu'elle est présente dans le mélange complexe, par liaison spécifique sonde/cible. Le deuxième jeu d'électrodes possède des électrodes non fonctionnalisées. Dans un exemple spécifique, le jeu d'électrodes fonctionnalisées est situé au-dessus du réseau de capillaires et le jeu d'électrodes non fonctionnalisées est situé en dessous du réseau de capillaires. Chaque capillaire est perpendiculaire aux n électrodes du jeu d 'électrodes fonctionnalisées et aux n électrodes du jeu d'électrodes non fonctionnalisées (Fig. 9, 10 ,11). La construction est réalisée de manière telle que, le premier spot des n électrodes fonctionnalisées est dans le premier capillaire du réseau de capillaires, le deuxième spot des n électrodes fonctionnalisées est dans le deuxième capillaire du réseau de capillaires et ainsi de suite (Fig. 11). Un couple d'électrodes est constitué d'une électrode greffée de sondes organisées en spots au-dessus du réseau de capillaires et d'une électrode non fonctionnalisée en vis-à-vis en dessous du réseau de capillaires. Les électrodes peuvent être d'une très faible épaisseur pour permettre la détection par SPR. A chaque extrémité du réseau de capillaires, les capillaires convergent vers un réservoir circulaire. Le réservoir comporte une électrode (électrode de réservoir), dans le même plan que celui du jeu d'électrodes fonctionnalisées (Fig. 11). Dans un exemple spécifique, cette électrode est circulaire. Dans un exemple spécifique, cette électrode est située au centre du plafond de chaque réservoir. Le jeu d'électrodes fonctionnalisées (électrodes greffées des sondes) est complété par deux électrodes de liaison supplémentaires : une première électrode courbe est située entre la première électrode de réservoir et la première électrode fonctionnalisée et une deuxième électrode, courbe est située entre la deuxième électrode de réservoir et la dernière électrode fonctionnalisée. L'électrode de liaison est courbe, sa courbure est définie de façon telle que, les distances entre l'électrode de liaison et le centre du réservoir (électrode de réservoir) soient identiques en tout point de l'électrode.

La première et la deuxième électrodes de liaison supplémentaires sont situées respectivement entre la première électrode de réservoir et la première électrode fonctionnalisée, et entre la deuxième électrode de réservoir et la dernière électrode fonctionnalisée, de telle sorte que les distances les plus courtes entre l'électrode de liaison et l'électrode réservoir sont identiques en tout point des électrodes.

La description faite ci-dessus pour le dispositif de l'invention comprenant un double réseau de capillaires des éléments constitutifs du réseau tels que les capillaires, les électrodes, les détecteurs ... est transposable à la préparation du dispositif comportant un simple réseau, sous réserve d'être compatible avec le fonctionnement de ce dispositif à simple réseau, et adapté si nécessaire à cette structure.
De façon analogue, la description faite, des molécules à analyser et des sondes utilisées, ainsi que de leur préparation et de leurs modalités de mise en oeuvre et de détection est transposable à la préparation du dispositif comportant un simple réseau, sous réserve d'être compatible avec le fonctionnement de ce dispositif à simple réseau, et adapté si nécessaire à cette structure.

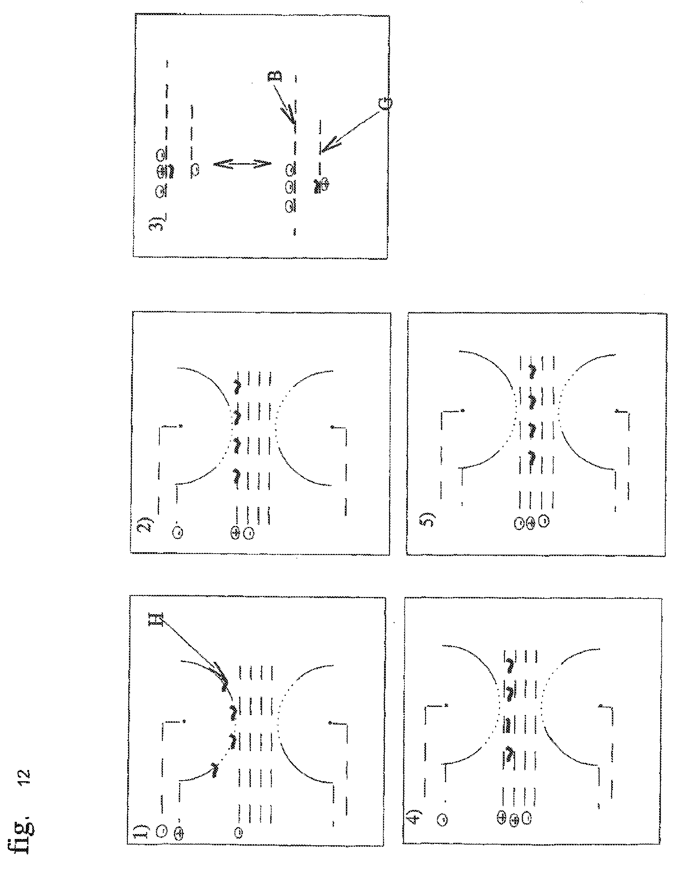

Le principe de fonctionnement du dispositif comportant un réseau unique de capillaires fait appel à l'hybridation active (ha ) et peut être décrit comme suit :
1/ L'échantillon (Fig. 12) à analyser est introduit dans le premier réservoir. Un potentiel électrique est appliqué entre la première électrode de liaison (positif) et l'électrode du premier réservoir (négatif), lorsque les molécules analysées sont des acides nucléiques. Le potentiel peut être inversé alternativement dans le cas d'analyse de protéines. La description concerne ci-dessous le fonctionnement pour les acides nucléiques. Les molécules à analyser migrent de façon équimolaire dans chacun des capillaires et se concentrent au niveau de l'électrode de liaison.
2/ Le potentiel entre l'électrode de réservoir et l'électrode de liaison est ensuite coupé et un potentiel électrique est appliqué entre la première électrode fonctionnalisée (+) et l'électrode de liaison (-). Les molécules de chaque capillaire migrent alors au niveau de la première électrode fonctionnalisée où les cibles complémentaires des spots de la première électrode (un spot par capillaire) peuvent s'hybrider (l'hybridation est accélérée par le champs électrique). La concentration au niveau de chaque spot est maximale (elle ne dépend que du nombre de capillaires et non plus du volume total des canalisations).
3/Afin de confiner les cibles au niveau du spot, la deuxième électrode ligne (non fonctionnalisée) peut être portée à un potentiel négatif ; on obtient une distribution de charge (- + -) où la charge + est centrée sur le premier spot de chaque capillaire. Pour améliorer l'hybridation, les potentiels électriques peuvent être discontinus, le laps de temps sans potentiel correspondant à un temps de relaxation, pendant lequel les cibles peuvent s'hybrider sans contrainte. Pour augmenter le mélange des cibles à analyser et ainsi favoriser l'hybridation des cibles présentes en faible nombre, durant le temps de relaxation un potentiel discontinu et alternatif peut être établi entre le premier couple d'électrodes au-dessus et en dessous du réseau de capillaires (ceci améliore encore la spécificité d'hybridation).
   Une fois les cibles hybridées au niveau de la première ligne de spots les potentiels électriques sont décalés d'une ligne. En notant 0 la position de l'électrode de liaison et respectivement 1, 2 et 3 les positions des première, seconde et troisième électrodes fonctionnalisées greffées de sondes, la séquence de potentiel électrique appliquée peut être décrite telle que :4/ la deuxième électrode fonctionnalisée est mise à un potentiel positif la distribution de charges est (0 -, 1 +, 2 +) (éventuellement la troisième électrode est mise à un potentiel négatif) avec une distribution de charge (0 -, 1 +, 2 +, 3 -);
5/ la première électrode fonctionnalisée est mise à un potentiel négatif, la distribution de charges est (0 -, 1 -, 2 +) éventuellement (0 -, 1 -, 2 +, 3 -);
6/ l'électrode de liaison est mise à 0 pour une distribution de charges (1-, 2 +) éventuellement (1 -, 2 +, 1 -)
7/ potentiel électrique discontinu et alternatif entre l'électrode 2 fonctionnalisées et l'électrode 2 non fonctionnalisées.

L'ensemble des sondes non hybridées au niveau de la première ligne de spots, va migrer au niveau de la seconde ligne de spots. L'ensemble des séquences de migration, relaxation, mélange (points 4 à 6) est appliqué de proche en proche pour hybrider tous les spots de toutes les lignes qui ont des cibles complémentaires dans l'échantillon analysé. Une fois arrivées dans le deuxième réservoir, les cibles qui avaient migré dans des capillaires différents se mélangent de nouveau. Il est alors possible selon une variante de réalisation, d'effectuer les séquences de potentiel électrique dans l'autre sens pour parcourir le réseau de capillaires en sens inverse. Les allers et retours des cibles entre les deux réservoirs à travers les capillaires permettent d'augmenter la sensibilité de détection du dispositif.

Plusieurs possibilités de détection sont envisageables pour quantifier les cibles hybridées dans le dispositif à un unique réseau de capillaires, conformément à ce qui a été décrit plus haut pour le dispositif à double réseau de capillaires.

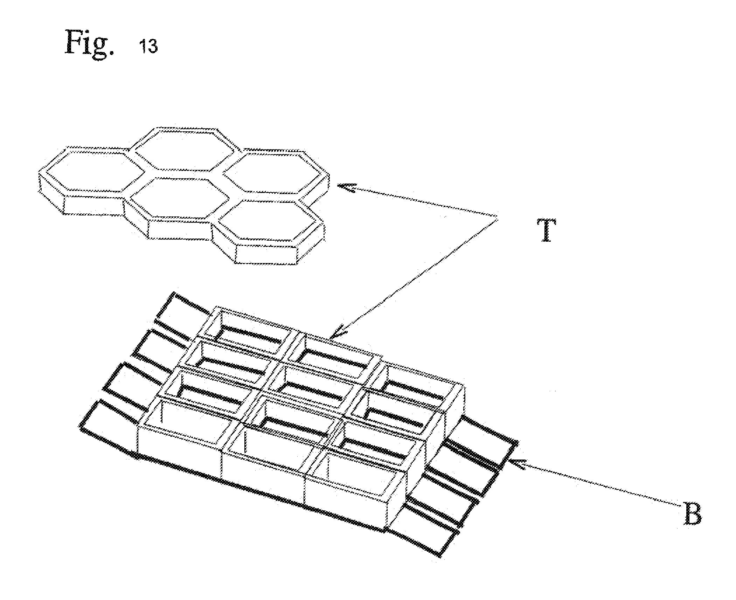

Par SPR:
- Les cibles peuvent être quantifiées directement sur le réseau d'électrodes fonctionnalisées. Un prisme en trièdre est adapté au dos de chaque électrode ligne du réseau d'électrodes fonctionnalisées pour pouvoir réaliser la mesure de SPR (cf. description chapitre détection par SPR).
- Pour diminuer les problèmes de bruit de fond et de sensibilité de détection, la mesure par SPR peut se faire sur le jeu d'électrodes non fonctionnalisées où la face opposée aux capillaires de chaque électrode sera couplée à un prisme trièdre (cf. chapitre spr). Dans ce procédé de détection, le jeu d'électrodes fonctionnalisées peut être couplé à une structure ou chaque spot est cloisonné et délimité par une petite loge (Fig. 13). Chaque loge est une petite cuvette, dont le fond est constitué par l'électrode fonctionnalisée et qui est ouverte dans le capillaire en vis-à-vis de l'électrode non fonctionnalisée (loge ouverte que d'un côté d'un capillaire du réseau de capillaires.) Les cloisons des loges évitent le mélange des cibles d'un spot à l'autre au cours de la migration d'une des cibles entre l'électrode fonctionnalisée et l'électrode non fonctionnalisée.

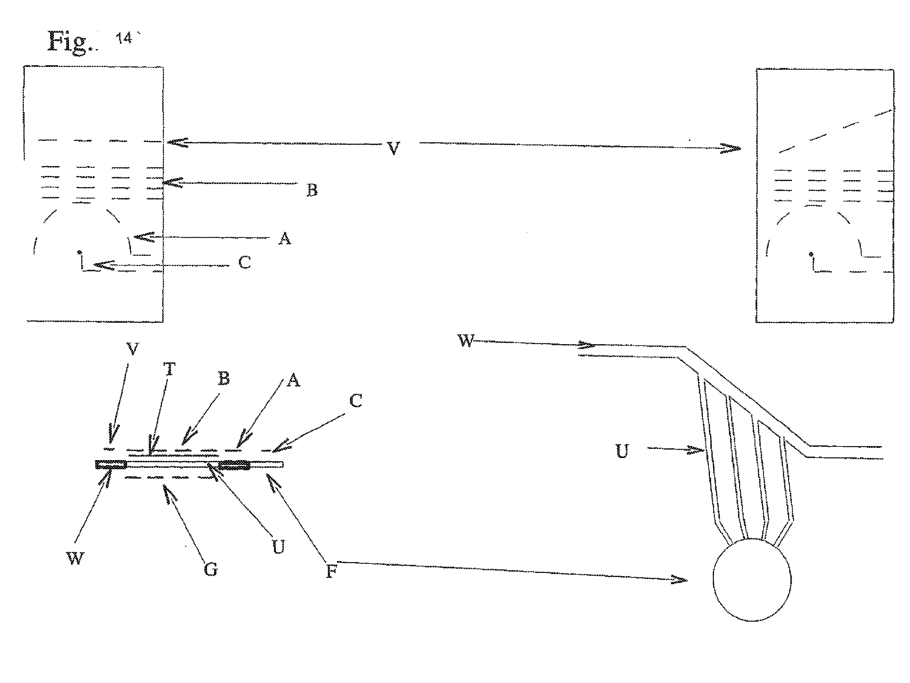

Dans le cadre de l'utilisation de loges ouvertes que d'un côté et d'un réseau de capillaires unique il est possible d'adapter un canal transversal au système de capillaires et un système de retard de migration (comme décrit pour le réseau de capillaires inférieur du dispositif à double réseau cf. chapitre). Dans le cadre d'utilisation d'un réseau de capillaire unique, il est possible de supprimer le deuxième réservoir et de le remplacer par un canal transversal au système de capillaire et un système retard de migration (Fig. 14). Ainsi les mêmes types de détection décrits pour le système possédant deux réseaux de capillaires superposés, sont applicables au système simplifié.

Dans cette configuration, la première électrode de liaison est courbe de telle sorte que les distances entre l'électrode de liaison et le centre du réservoir sont identiques en tout point de l'électrode, et en ce que la deuxième électrode de liaison est non courbe. Cette électrode sert de frontière électrique infranchissable par les sondes lors de l'hybridation, puis à l'étape de la détection permettra de diriger les cibles vers le système de retard à l'aide des potentiels établis par l'électrode cible et l'électrode de liaison.

Si l'électrode a un angle saillant par rapport au canal transversal, l'effet retard est amplifié.

Par fluorescence:
- Si les cibles sont marquées avec un marqueur fluorescent, il est possible de lire directement les cibles hybridées par un scanner sur le jeu d'électrodes fonctionnalisées. De même que l'utilisation de la fluorescence couplée a la SPR (excitation des molécules fluorescentes par l'onde évanescente de la SPR) peut être utilisée.
- Sans que les cibles soient marquées, les taux de complexes sonde/cible peuvent être évalués en utilisant des ligands fluorescents de la cible ou du complexe. Pour les puces à ADN on citera les acridines et notamment l'acridine orange qui est un intercalant de l'ADN chargé positivement.
L'acridine orange permet de marquer différemment les ADN simples ou doubles, les molécules libres seront éliminées grâce à l'action des champs électriques produits par les systèmes d'électrodes. L'ensemble des mesures peut être fait au cours de réactions d'hybridation ou de complexation grâce au jeu d'électrodes qui permettent de manipuler l'ensemble des molécules chargées. Par cette approche, il est possible d'évaluer le nombre de molécules de sondes composant le spot et le nombre de cibles qui vient s'hybrider ; ces deux mesures permettent d'établir les concentrations réelles des cibles en solution.

Pour éviter la fluorescence parasite provenant des électrodes l'ensemble de la connectique peut être réalisé avec des alliages de type ITO qui sont transparents dans le visible (oxyde d'indium et oxyde d'étain ou tout autre alliage équivalent tel que, ...). Ces alliages étant très électrophiles, ils doivent subir une procédure d'isolation chimique décrite au chapitre isolation chimique.

Dans une construction particulière du dispositif de l'invention, les sondes peuvent être déposées entre les électrodes du jeu d'électrodes fonctionnalisées (Fig. 7).

Dans le cadre de l'utilisation d'un double réseau de capillaires, le dispositif selon l'invention comprend un ou plusieurs détecteur(s) appropriés pour collecter séparément les cibles moléculaires et/ou pour analyser séparément les cibles moléculaires, nommé ci-après le ou les détecteur(s).

Dans des modes de réalisation préférés, le détecteur est relié en sortie d'un canal transversal inférieur reliant les capillaires du second réseau. Dans le texte qui suit, on décrit en détail un dispositif comprenant un détecteur et un canal transversal inférieur reliant l'ensemble des capillaires du second réseau. Bien entendu, d'autres variantes sont envisageables, en particulier, plusieurs détecteurs peuvent être utilisés, chaque détecteur étant relié en sortie d'un canal transversal inférieur reliant une partie des capillaires du second réseau.

Tout système de détection peut être adapté à la sortie du second réseau de capillaires, en particulier en fonction du type de marquage utilisé pour différencier les cibles moléculaires par exemple provenant d'échantillons différents.

A titre d'exemples, si les cibles sont repérables par fluorescence, notamment après marquage par une sonde fluorescente, la détection peut se faire à l'aide d'un spectrophotomètre permettant d'exciter et d'acquérir la fluorescence de molécules marquées ou la fluorescence intrinsèque des molécules étudiées. Pour ce faire, dans un mode de réalisation spécifique, il est possible d'ajouter à la sortie d'un canal transversal inférieur, un capillaire creusé dans un cristal de quartz ou dans tout autre matériau transparent permettant l'excitation et l'acquisition de la fluorescence (par exemple du plastique). L'excitation et la lecture de la fluorescence a lieu lors du passage à travers le capillaire de quartz. La fluorescence naturelle des molécules étudiées peut être utilisée pour la détection. De même, des cristaux de NaCl ou de KCl peuvent être utilisés pour réaliser des études en spectrométrie infra-rouge ou en spectrométrie ramant.

Alternativement, la détection et la quantification des cibles utilisent la résonance para-magnétique ou électronique si les cibles sont marquées par un marqueur para-magnétique.

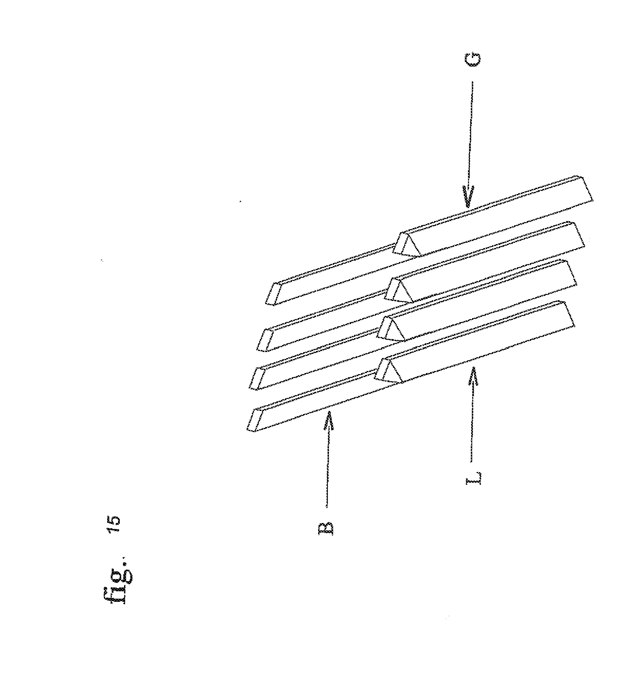

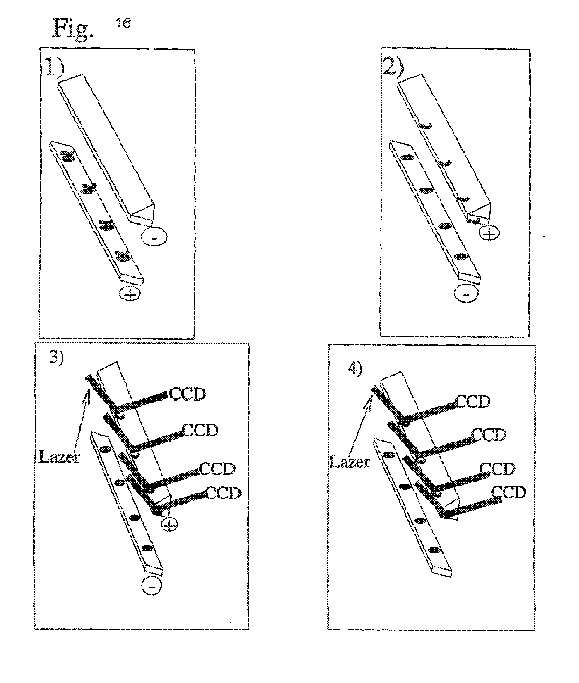

Lorsque la détection est réalisée par la SPR, les électrodes lignes distales ou inférieures sont constituées d'une lame d'or (ou d'un autre métal à électron libre) de quelques dizaines de µm d'épaisseur. La face externe (opposée aux canaux) de chaque électrode distale est jointive à une des trois faces d'un prisme (verre, quartz, plastique ou tout autre matériau transparent pouvant convenir à la SPR). Le prisme est constitué d'un trièdre dont l'une des trois faces rectangulaires est couplée à la face externe d'une électrode ligne distale, la longueur du trièdre correspondant à la celle de l'électrode (Fig. 15).
Après l'hybridation des cibles, le circuit de micros canaux est rincé et purgé de toutes les cibles non hybridées, les cibles hybridées sont retenues au niveau de chaque loge ou de chaque spot pour le concept simplifié. Le système est mis sous tension de façon telle qu'au niveau de chaque couple d'électrodes ligne, le potentiel est positif à l'électrode médiante et négatif à l'électrode distale respectivement dans le concept électrodes fonctionnalisées et non fonctionnalisées. Nous assimilerons pour la description l'électrode fonctionnalisée à l'électrode médiante et l'électrode non fonctionnalisée à l'électrode distale. Pour les puces à protéines, à anticorps ou à récepteurs moléculaires les potentiels seront adaptés en fonction de la charge des molécules étudiées. Un agent chaotrope capable de défaire le complexe sonde-cible est introduit dans le milieu. Les sondes se séparent des cibles, mais restent retenues dans chaque loge ou spot par la charge négative de l'électrode médiante (Fig. 16). Le potentiel au niveau du premier couple d'électrodes est inversé tel qu'il soit positif à l'électrode distale, et négatif à l'électrode médiante. Les cibles de la ligne de loges ou de spots dépendantes du couple d 'électrodes, migreront dans le réseau de capillaires pour venir au niveau de l'électrode distale perpendiculaire au réseau de capillaire (réseau inférieur pour le système à deux réseaux superposés), telle que les sondes de chaque loge ou spot se retrouvent dans un capillaire différent.

L'invention concerne également un procédé d'analyse de SPR comprenant
- l'hybridation des cibles sur une électrode,
- la déshybridation par un agent chaotrope,
- le maintien des cibles par un potentiel électrique,
- l'inversion du potentiel pour faire migrer les cibles sur l'électrode non fonctionnalisée,
- mesure de la SPR sur l'électrode non fonctionnalisée.

La mesure SPR se fera par la réflexion de la lumière sur la face externe de l'électrode distale, à travers les prismes disposés sur chaque électrode. Il est possible d'estimer la constante de dissociation en observant la vitesse à laquelle varie le signal de SPR mesuré au cours du temps. En appliquant un courant alternatif entre un couple d'électrodes ligne, il est possible de mesurer les constantes d'association et de dissociation sonde/cible. Dans ce cas particulier les expériences se font sans agent dénaturant, les variations de concentration locales induites par le champ électrique permettent de réaliser les associations et dissociations des sondes et des cibles.

Le courant appliqué aux électrodes peut perturber le signal de SPR. Pour limiter cette perturbation, le champ appliqué entre le couple d'électrodes lignes peut être discontinu. La mesure de SPR se faisant alors uniquement pendant les phases d'interruption du champ, nous parlerons de mesure par impulsions SPR couplées à la fréquence du champ électrique. Il est possible de déterminer le coefficient de diffusion de la molécule en analysant les vitesses de variations des signaux SPR en fonction du temps d'interruption du champ électrique entre le couple d'électrodes lignes. Les mêmes opérations sont renouvelées pour chaque couple d'électrodes lignes.

Du fait que la surface métallique n'est pas fonctionnalisée, les cibles peuvent venir en contact directement avec le métal ce qui augmente ainsi la sensibilité de la détection. De plus, le champ électrique permet de concentrer au maximum les cibles au niveau de la surface du métal ce qui accroît encore la sensibilité de détection. La détection SPR étant dépendante de la masse, plus les molécules à détecter sont lourdes et plus la détection sera efficace. Une augmentation de la masse des molécules permet donc d'abaisser le seuil de détection. L'utilisation de cibles dans lesquelles les atomes ont été remplacés par des isotopes lourds permet d'augmenter la masse moléculaire et ainsi d'abaisser le seuil de détection.

Dans le cadre de l'alternative correspondant à l'utilisation d'un simple réseau de capillaires, il est possible de mesurer directement l'impédance des molécules qui se fixent sur une cible par détection électrique directe.

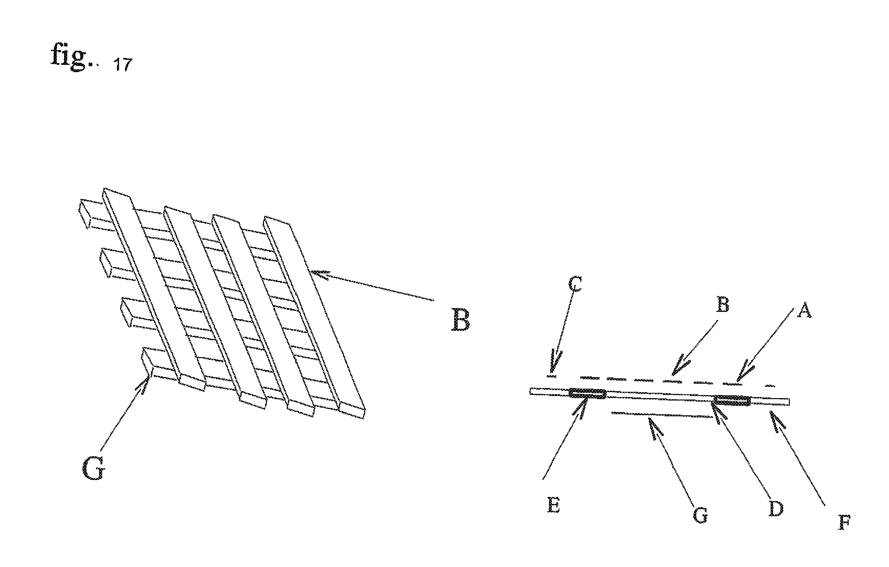

En plus de son rôle de manipulation des sondes et des cibles par un champ électrique, le système d'électrodes implanté aux puces, permet de mesurer directement l'impédance des molécules qui se fixent sur une cible. Afin d'atteindre de haute densité de spots, 10³ à 10⁶ sur une surface inférieure à 20 cm², un système d'électrodes croisées est réalisé. Le système est composé de deux jeux d'électrodes superposés situés dans deux plans différents en dessous et au-dessus d'une matrice de spots de sondes. La direction des électrodes du jeu non fonctionnalisé est perpendiculaire à celle des électrodes du jeu fonctionnalisé (Fig. 17). Les spots ont implantés par exemple, sur les électrodes du jeu fonctionnalisé à chaque intersection des électrodes fonctionnalisées et de la projection dans le plan supérieur des électrodes du jeu non fonctionnalisé. L'accrochage des sondes dépend de la nature des électrodes et de la nature des molécules sondes (cf. chapitre implantation des sondes et isolement des électrodes.) Dans le cadre des molécules ADN il est souhaitable de contraindre au maximum la conformation des molécules afin de minimiser les artefacts de mesure dus à la courbure de l'ADN et de l'hybridation intra-moléculaire, qui entraînent des variations d'impédance du même ordre que pour une hybridation. Une solution pour contraindre l'ADN consiste à l'adsorber sur l'électrode par un peignage moléculaire. Les molécules étirées sur l'électrode ne peuvent plus se couder ou s'hybrider contre elles-mêmes, par contre elles gardent la faculté de s'hybrider avec une séquence complémentaire en solution. Une autre solution, consiste à tendre la molécule sonde entre une électrode du jeu fonctionnalisé et une électrode du jeu non fonctionnalisé, en la fixant par ces extrémités aux électrodes. Les oligonucléotides sondes utilisés, sont fonctionnalisés aux deux extrémités 5' et 3'. La fonction choisie en 5' est différente de celle en 3'. Les deux types de fonction ont une activation et/ou une catalyse différente. Il est par exemple choisi des fonctions Hs, NH2 en 5' avec une activation chimique ou lumineuse et une fonction pyrole en 3' avec une catalyse électrique. La distance entre les jeux d'électrodes fonctionnalisées et non fonctionnalisées est choisie telle que, les molécules sont étirées, sans pouvoir adopter de courbure particulière ou réaliser une hybridation intramoléculaire. Une alternative consiste à fonctionnaliser l'extrémité 5' de la sonde pour la greffer sur l'électrode fonctionnalisée et à leur ajouter une courte séquence (10 à 20 bases) en 3' (attache 3'). La séquence de l'attache 3' est choisie spécifiquement, pour qu'il n'y ait pas hybridation avec les cibles. Une séquence complémentaire à l'attache 3' est greffée sur l'électrode non fonctionnalisée en vis-à-vis. Les sondes sont accrochées à l'électrode du jeu fonctionnalisé par leur extrémité 5' grâce à une liaison chimique et à l'électrode non fonctionnalisée par l'extrémité 3' grâce au duplex de 10 à 20 paires de bases formé entre l'attache et sa séquence complémentaire greffée sur l'électrode. Les sondes sont ainsi tendues entre les deux électrodes ce qui minimise les hybridations intra-moléculaires et la courbure.

La puce à électrodes avec les sondes greffées, peut être hybridée passivement par diffusion simple des cibles au niveau de chaque spot comme cela est réalisé pour les bio-puces actuelles. On préfère toutefois une hybridation active en suivant le procédé décrit plus haut. À cette fin, un réseau de capillaires et deux réservoirs similaires à ceux décrits dans ce chapitre précédent, sont disposés entre les jeux d'électrodes fonctionnalisées et non fonctionnalisées. Deux électrodes de réservoirs ainsi que deux électrodes de liaison sont ajoutées au jeu d'électrodes fonctionnalisées(cf. schéma). Une fois la puce hybridée, la variation d'impédance de chaque spot permet de déterminer la quantité de cibles fixées. L'intersection entre une électrode fonctionnalisée et la projection (dans le plan supérieur) d'une électrode non fonctionnalisée est unique et correspondante à un seul spot. La mesure d'impédance est réalisée spot à spot en appliquant successivement une différence de potentiel électrique et un courant électrique à tous les couples possibles d'électrodes formés par une électrode non fonctionnalisée et une électrode fonctionnalisée.

La disposition perpendiculaire, entre les deux jeux superposés d'électrodes, permet théoriquement de réaliser la mesure. Toutefois, l'utilisation d'un courant alternatif ou discontinu et le fait qu'une électrode connecte plusieurs spots, entraîne des problèmes de capacité électrique parasite qui perturbent la mesure. En effet il devient difficile voire impossible de mesurer correctement le courant et les tensions électriques pour définir l'impédance de chaque spot. Pour pallier ce problème il est nécessaire d'introduire des interrupteurs qui permettront d'établir une tension et un courant spot à spot. Pour réaliser les interrupteurs compatibles avec la dimension des bio-puces, le jeu fonctionnalisé d'électrodes (ou le jeu non fonctionnalisé) est remplacé par un quadrillage d'électrodes dans un même plan, constitué d'un premier ensemble d'électrodes (horizontal) isolé et perpendiculaire à un deuxième ensemble d'électrodes du premier ensemble (vertical). La maille du quadrillage délimite un espace ou est disposée une petite électrode (électrode spot) de 10 à 500 µm de côté selon la taille du quadrillage. Au niveau de chaque maille du quadrillage sont disposés un ou deux transistors à effet de champ tels que, la grille du transistor soit reliée à l'électrode horizontale d'un côté de la maille, la borne entrante (source) du transistor à l'électrode verticale d'un côté de la maille et la borne sortante (drain) du transistor à l'électrode spot.

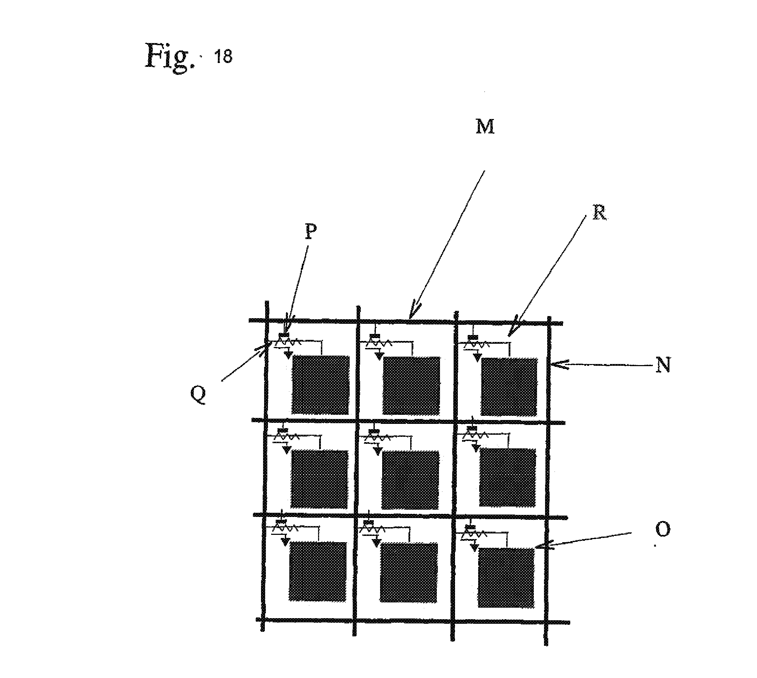

En résumé, nous obtenons un quadrillage dont les mailles, définies par les électrodes horizontales et verticales, sont occupées par de petites électrodes spot. Les électrodes spot sont reliées à deux des quatre côtés de la maille par un ou deux transistors à effet de champs (Fig. 17, 18). Les sondes moléculaires sont greffées au niveau de chaque électrode spot. Les électrodes du jeu non fonctionnalisé sont disposées en vis-à-vis de chaque colonne d'«électrodes spot» et parallèlement aux électrodes verticales du quadrillage fonctionnalisé. Chaque électrode du jeu non fonctionnalisé est reliée à la masse. Le jeu d'électrodes non fonctionnalisées peut être remplacé par une plaque unique reliée à la masse.

Dans le cas ou l'impédance est mesurée avec un courant discontinu (le courant va toujours dans le même sens), un seul transistor par « électrode spot » est nécessaire pour jouer le rôle de l'interrupteur. En plaçant les électrodes horizontales sous tension les grilles de tous les transistors sont alimentées, ce qui coupe le courant entre l'entrée et la sortie de tous les transistors, les électrodes spot sont donc isolées. En coupant le courant au niveau d'une seule électrode horizontale et en appliquant le courant et un champ électrique discontinu sur une électrode verticale unique, seul le transistor à l'intersection des deux électrodes laisse passer le courant entre son entrée et sa sortie. Un spot unique est mis sous tension, la variation d'impédance au niveau de l'électrode spot peut être déterminée sans être parasitée par les autres spots.

Dans le cas ou l'impédance est déterminée avec un courant alternatif (le courant va dans les deux sens) il faut que l'électrode spot soit alimentée quel que soit le sens du courant. Il est donc nécessaire de disposer dans la maille, deux transistors à effet de champ qui ont des caractéristiques opposées, c'est-à-dire, que lorsque la tension au niveau des grilles des transistors est nulle ou est négative, le courant peut passer entre l'entrée et la sortie dans un sens pour le premier transistor et dans l'autre sens pour le deuxième transistor. Quel que soit le sens de passage du courant, l'électrode spot est alimentée. Il serait avantageux d'introduire des transistors laissant passer le courant dans les deux sens entre l'entrée et la sortie, comme les transistors de type « nmos » ou « pmos », mais ces transistors ont une borne supplémentaire et nécessitent donc une électrode horizontale par maille pour faire la connexion, ce qui est limitant pour la miniaturisation.

Il est possible de réaliser une détection mixte de la fluorescence et de l'impédance ou de la fluorescence seule (les électrodes ne sont alors utilisées que pour piloter l'hybridation conformément à la description plus haut de l'hybridation active (ha)). Pour ne pas gêner la fluorescence émise par les sondes ou les cibles, l'ensemble des circuits et électrodes peut être réalisé en alliage transparent tel que ITO. Dans le cadre d'une détection par fluorescence pour les acides nucléiques, une alternative au marquage des cibles par un chromophore, consiste à utiliser un intercalant fluorescent aux acides nucléiques. Les acridines sont de bons candidats et notamment l'acridine orange qui a la particularité de fluorescer différemment quand elle est associée à des molécules d'ADN simple brin ou à un duplex ADN/ADN. De plus l'acridine orange est chargée positivement ce qui permet de la déplacer dans un champ électrique. La densité des sondes au niveau de chaque spot est déterminée par un marquage à l'acridine et mesure de la fluorescence émise, les différents champs électriques appliqués permettant d'éliminer les molécules d'acridine non accrochées aux sondes d'ADN. La séquence d'application des champs électriques est similaire à celle décrite chapitre ha, mais le sens des champs est adapté à la charge de la molécule que l'on veut déplacer. Une fois les cibles introduites sur la puce, la mesure de la fluorescence relative à la formation du complexe ADN/ADN permet de déterminer la concentration de chaque type de cibles en la comparant à la fluorescence des sondes. Ce procédé permet de réaliser des mesures dynamiques d'hybridation et de déterminer les constantes de dissociation (kd) et d'association (ka) entre les cibles et les sondes. La mesure du kd et du ka d'une cible peut être comparée aux mesures obtenues pour la séquence native ce qui rend possible de mettre en évidence le polymorphisme. De manière plus générale, en réalisant une mesure mixte, il est possible de mettre en évidence des mésappariements de la sonde pour la cible, par exemple en utilisant un intercalant et un marquage fluorescent des cibles avec un chromophore, ou une mesure d'impédance et un intercalant...

De façon particulière, un détecteur utilisé dans le dispositif de l'invention est un spectromètre de masse. Le spectromètre de masse permet d'informer, en même temps, l'utilisateur sur le nombre de molécules cibles et la nature de ces molécules (poids moléculaires et dans certaines conditions leurs formules). Le dispositif peut par exemple comprendre un canal transversal inférieur contigu à l'ElectroSpray Ionisation (ESI) (Kebarle et al.- Anal. Chem. ; 1993; 65 (22); p. 972-986) d'un spectromètre de masse. Préférentiellement, le canal transversal inférieur est connecté au détecteur via une pipette piézo électrique ou thermique qui permet une injection régulière dans l'ElectroSpray. Toutes les améliorations du ESI sont adaptables telles que, micro spray (micro ESI), nano spray (nano ESI), pico spray (pico ESI) (Smith *et al. -* T.Matsuo *et al* Editors 1995, John Wiley and son: Baffinslane, Chischester, West Sussex, UK, p. 41-74 ; Emmett et al. - J.AM Soc. Mass Spectrom, 1994 ; 5 ; p. 605-613 ; Valaskovic et al. - Anal. Chem.; 1995; 67 (20); p. 3802-3805). D'autres types de détecteurs, tels que les quadripôles analyseur en temps de vol à accélération orthogonal (aoTOF ou QTOF) (Chernushevich et al. - Proceedings of the 43rd ASMS Conference on MS and Allied Topics 1995 Atlantas, Georgia ; Sanzone, G. - Rev. SCi. Instrum, 1970; 41 (5) p. 741), sont utilisables dans le dispositif de l'invention.

Les données sur la masse et la charge des ions moléculaires et le nombre d'ions moléculaires permettent de déduire la nature et le nombre de chaque type de cibles moléculaires retenues spécifiquement dans une micro-colonne donnée. La formule des molécules liées spécifiquement aux sondes au niveau de chaque micro-colonne peut être déduite en particulier par le marquage spécifique des cibles et la décomposition des molécules durant l'acquisition du spectre par la méthode MS/MS (Chernushevich et al. - Proceedings of the 43rd ASMS Conference on MS and Allied Topics 1995 Atlantas, Georgia.). Il peut être également envisagé, dans un mode de réalisation particulier, de réaliser une double détection fluorescente et par spectrométrie de masse en montant en tandem le capillaire de quartz permettant l'analyse fluorescente et l'ElectroSpray. De la même manière, plusieurs types différents de détecteurs ou d'analyseurs peuvent être montés en tandem.

Selon un mode de mise en oeuvre spécifique du dispositif de l'invention, il est possible d'analyser en parallèle, différents transcriptomes de différents échantillons.

Dans ce mode de mise en oeuvre particulier du dispositif, le dispositif comprend des acides nucléiques [immobilisés dans les loges ou sur des particules] constitués d'un ensemble d'acides nucléiques, représentatif d'un transcriptome.

Par « représentatif d'un transcriptome », il faut comprendre que les acides nucléiques immobilisés dans la loge ont des séquences identiques ou complémentaires ou hybrident spécifiquement dans des conditions stringentes avec des ARN messagers, produits de la transcription des séquences d'acides nucléique du génome d'une cellule donnée ou d'un ensemble de cellules, et sont dans des proportions équivalentes à celles des produits de transcription obtenus dans des conditions particulières pour ladite cellule ou ensemble de cellules.

Des méthodes de préparation d'acides nucléiques représentatifs d'un transcriptome sont décrites dans les exemples ci-après.

De préférence, l'ensemble d'acides nucléiques représentatif d'un transcriptome est immobilisé à des particules, lesdites particules étant immobilisées dans les micro-colonnes par des moyens appropriés. Le dispositif permet alors par le procédé décrit notamment en exemple 3 ci-après d'analyser en parallèle les différents transcriptomes.

L'invention vise en particulier, les particules en tant que telles comportant un ensemble d'acides nucléiques immobilisés, représentatif d'un transcriptome.

Elle concerne également un jeu de molécules d'acides nucléiques choisies selon les critères définis en exemple 3. Le jeu de molécules d'acides nucléiques est en particulier utilisable avec la puce à micro-colonnes comprenant les ensembles d'acides nucléiques représentatifs de transcriptomes dans chaque micro-colonne.

Dans un autre mode de réalisation, le dispositif de l'invention est **caractérisé en ce que** les sondes moléculaires sont des peptides ou polypeptides, de préférence des anticorps ou leurs fragments liant les antigènes.

L'invention vise naturellement les utilisations du dispositif pour la détection et/ou le dosage de molécules d'ARN et/ou d'ADN spécifiques contenues dans un échantillon biologique, notamment dans un extrait cellulaire, les sondes moléculaires étant choisies de sorte qu'elles hybrident spécifiquement avec un type d'ARN ou ADN contenu dans l'échantillon biologique. L'utilisation d'un tel dispositif permet en particulier l'analyse comparative de molécules d'ARN et/ou d'ADN spécifiques contenues dans au moins deux échantillons biologiques selon par exemple le procédé décrit en exemple 4.

En choisissant de manière appropriée plusieurs sondes par gène, par exemple une sonde spécifique par exon, la quantification des sondes permet de fournir une signature spécifique de la forme d'épissage d'un gène.

L'invention concerne par ailleurs un procédé de séparation et d'analyse de cibles moléculaires en solution dans un mélange complexe, ledit procédé comprenant
a. l'introduction du mélange complexe contenant les cibles moléculaires à séparer dans un dispositif de l'invention tel que décrit ci-dessus,
b. la circulation du mélange complexe à travers la matrice de micro-colonnes du dispositif dans des conditions appropriées pour permettre une liaison spécifique des cibles sur les sondes des micro-colonnes,
c. l'élution des cibles retenues spécifiquement sur les sondes des micro-colonnes,
d. la circulation des cibles éluées des micro-colonnes vers un détecteur,
e. la récupération et/ou l'analyse de chaque cible au moyen d'un détecteur.

Dans un mode de mise en oeuvre spécifique, l'invention porte sur un procédé pour l'analyse comparative d'au moins deux populations de molécules d'ADN ou ARN spécifiques contenues dans deux échantillons biologiques, ledit procédé comprenant
a. le marquage des molécules d'ADN ou d'ARN issues d'un premier échantillon, par exemple avec un isotope lourd, de sorte à différencier la masse d'une molécule marquée d'ADN ou d'ARN contenue dans le premier échantillon de celle d'une molécule d'ADN ou d'ARN de structure identique mais non marquée contenue dans un second échantillon;
b. le mélange équimolaire des deux populations d'ADN ou d'ARN à comparer;
c. l'introduction du mélange équimolaire dans un dispositif approprié selon l'invention comprenant un détecteur constitué d'un spectromètre de masse,
d. la circulation du mélange équimolaire à travers la matrice de micro-colonnes du dispositif dans des conditions appropriées pour permettre une liaison spécifique des cibles sur les sondes des micro-colonnes,
e. l'élution des cibles retenues spécifiquement sur les sondes des micro-colonnes,
f. la circulation des cibles éluées des micro-colonnes vers un spectromètre de masse,
g. la détection et/ou le dosage de chaque cible, marquée ou non marquée, au moyen d'un spectromètre de masse.

Dans un mode de mise en oeuvre particulier de ce procédé, le dispositif choisi pour sa mise en oeuvre, est constitué en particulier de couples d'électrodes lignes comme décrit précédemment, permettant de contrôler l'élution et/ou la migration des cibles éluées au niveau de chaque ligne de micro-colonnes. Dans ce cas, un mode de mise en oeuvre préféré du procédé comprend les étapes suivantes :
a. l'introduction d'un mélange complexe contenant les molécules d'ADN et/ou ARN à séparer dans le dispositif à micro-colonnes approprié selon l'invention,
b. la circulation du mélange complexe à travers la matrice de micro-colonnes du dispositif dans des conditions appropriées pour permettre une liaison spécifique des cibles sur les sondes des micro-colonnes, de préférence en circuit fermé,
c. le cas échéant, la circulation à travers la matrice de micro-colonnes d'une solution de lavage permettant l'élimination des molécules non hybridées ou non spécifiquement hybridées, en circuit ouvert,
d. l'application d'une différence de potentiel électrique entre les couples d'électrodes lignes des micro-colonnes, positif au niveau des électrodes loges et négatif au niveau des électrodes distales, et l'application d'une différence de potentiel électrique entre les couples d'électrodes des canaux transversaux, négatif au niveau du canal transversal inférieur, et positif au niveau du canal transversal supérieur, de sorte que les molécules d'ADN ou d'ARN sont retenues dans chaque micro-colonne après dénaturation à l'étape e,
e. la circulation d'une solution dénaturante à travers une ou plusieurs lignes de la matrice de micro-colonnes dans des conditions permettant la dénaturation des complexes sonde/cible et donc l'élution des molécules d'ADN ou d'ARN,
f. l'inversion ou la suppression du différentiel électrique appliqué au niveau du couple d'électrodes lignes d'une ligne de micro-colonnes de la matrice,
g. la circulation des cibles dénaturées des micro-colonnes d'une ligne de la matrice vers un détecteur,
h. la récupération et/ou l'analyse de chaque cible au moyen d'un détecteur.

Une alternative préférée au procédé décrit ci-dessus permet de réaliser les étapes de dénaturation et de migration des cibles moléculaires uniquement par l'utilisation de champ électrique. Un tel procédé est **caractérisé en ce qu'**il comprend :
a. l'introduction d'un mélange complexe contenant les molécules d'ADN et/ou d'ARN à séparer dans un dispositif approprié selon l'invention,
b. la circulation du mélange complexe à travers la matrice de micro-colonnes du dispositif dans des conditions appropriées pour permettre une liaison spécifique des cibles sur les sondes des micro-colonnes, de préférence en circuit fermé, le cas échéant sous l'effet d'un champ électrique alternatif entre les électrodes des canaux transversaux et les électrodes lignes successives, comme décrit plus haut,
c. le cas échéant, la circulation à travers la matrice de micro-colonnes d'une solution de lavage permettant l'élimination des molécules non hybridées ou non spécifiquement hybridées, en circuit ouvert,
d. la connexion du canal transversal inférieur à un premier réservoir contenant une solution dénaturante comprenant des ions négatifs capables de migrer dans un champ électrique et la connexion du canal transversal supérieur à un second réservoir comprenant une solution dénaturante comprenant les mêmes ions négatifs,
e. l'application d'un potentiel électrique négatif au niveau des canaux transversaux inférieur et supérieur et des électrodes lignes distales, et d'un potentiel électrique positif au niveau des électrodes lignes loges, de telle sorte que les ions négatifs de la solution migrent vers les micro-colonnes chargées positivement et entraînent la dénaturation des cibles moléculaires, les cibles moléculaires ainsi dénaturées étant immobilisées dans les micro-colonnes du fait du potentiel électrique négatif au niveau des électrodes lignes distales.
f. l'application d'une différence de potentiel électrique entre les couples d'électrodes des canaux transversaux, négatif au niveau du canal transversal supérieur, et positif au niveau du second canal transversal inférieur,
g. l'inversion ou la suppression du différentiel électrique appliqué au niveau du couple d'électrodes lignes d'une ligne de micro-colonne de la matrice, de façon à permettre la migration par électrophorèse des cibles dénaturées des micro-colonnes d'une ligne de la matrice vers un détecteur,
h. la récupération et/ou l'analyse de chaque cible au moyen d'un détecteur.

L'invention porte également sur un procédé comprenant :
a. la constitution d'un dispositif selon l'invention, dans lequel chaque micro-colonne contient des cibles d'ARN ou d'ADN dans des proportions représentatives d'un transcriptome,
b. l'introduction d'un mélange stoechiométrique de sondes spécifiquement complémentaires des cibles d'ARN ou d'ADN immobilisées dans chaque micro-colonne de la matrice, chaque sonde spécifique d'une cible étant d'un poids moléculaire différent des autres sondes, et donc identifiable l'une par rapport à l'autre dans un spectromètre de masse,
c. la circulation du mélange de sondes à travers la matrice de micro-colonnes du dispositif dans des conditions appropriées pour permettre une liaison spécifique des sondes sur les cibles immobilisées sur les micro-colonnes,
d. l'élution des sondes retenues spécifiquement sur les cibles immobilisées dans les micro-colonnes,
e. la migration des sondes éluées des micro-colonnes vers un détecteur constitué d'un spectromètre de masse,
f. l'analyse de chaque sonde au moyen du spectromètre de masse.

En alternative à la méthode précédente, on pourra utiliser le jeu de sondes constitué de sondes spécifiques, chaque sonde spécifique d'une cible étant d'une taille différente des autres sondes et/ou marquée par un marqueur fluorescent spécifique, la détection étant réalisée après électrophorèse capillaire des sondes au moyen d'un spectrophotomètre approprié.

L'invention concerne également un procédé de séparation et de dosage de cibles moléculaires contenues dans un mélange complexe, ledit procédé comprenant :
a. l'introduction d'un mélange complexe contenant les cibles moléculaires à séparer dans un dispositif de l'invention comprenant d'une part un réseau de capillaires permettant la circulation du mélange complexe et d'autre part deux jeux d'électrodes selon la description faite ci-dessus,
b. l'application d'un potentiel électrique entre les électrodes du dispositif, de façon à ce que les cibles puissent migrer d'une extrémité du réseau de capillaires à l'autre et que les cibles complémentaires des sondes puissent s'hybrider,
c. l'analyse in situ ou la récupération suivie de l'analyse de chaque cible hybridée à une sonde au moyen d'un détecteur.

La mise en oeuvre de ce procédé est illustrée dans les exemples et figures.

L'invention concerne également un procédé pour l'analyse d'un transcriptome comprenant l'utilisation :
a. d'un jeu de particules magnétiques sur lesquelles est immobilisé l'ensemble des cibles représentatif d'un transcriptome à analyser, et
b. d'un jeu de différents types de sondes, où chaque type de sonde du jeu de sondes est spécifique et complémentaire d'un type de cible pour former un mélange stoechiométrique avec lesdites cibles.

L'invention concerne un procédé ainsi défini, **caractérisé en ce que** chaque type de sondes du jeu de sondes est spécifique et complémentaire d'un type de cibles pour former un mélange stoechiométrique.

L'invention concerne aussi un procédé tel que décrit ci-dessus, **caractérisé en ce que** chaque type de sonde présent dans le mélange est identifiable de manière non équivoque par sa masse moléculaire, laquelle est obtenue en combinant trois critères : la formule brute, la taille et d'éventuels marquages avec des atomes lourds.

L'invention concerne aussi un procédé tel que décrit ci-dessus, **caractérisé en ce que** chaque type de sonde présent dans le mélange est défini de manière non équivoque par sa taille et un marqueur de fluorescence.

Le procédé ainsi décrit, d'analyse de transcriptome peut être transposé à l'analyse d'un protéome ou à l'analyse de la perte ou du gain d'un ou plusieurs gènes chez un patient. Dans ces autres analyses, les sondes sont également déterminées pour être représentatives des cibles recherchées et chaque type de sonde du jeu de sonde est identifiable de manière non équivoque par rapport aux autres types de sondes.

Les exemples qui suivent permettent d'illustrer certains modes de réalisation préférés des dispositifs de l'invention et de comprendre plus aisément leurs utilisations, sans toutefois limiter la portée de l'invention.

### DESCRIPTION DES FIGURES

La figure 1A est une vue de dessus d'une matrice (1) de N lignes et P colonnes de micro-colonnes moulées dans un matériau approprié.
La figure 1B représente une ligne de micro-colonnes reliées par une électrode ligne médiante (21) et une électrode ligne distale (22).
La figure 2 représente une vue schématique du dispositif comprenant une matrice de micro-colonnes (2), un réseau de capillaires supérieurs (3) connecté au canal transversal supérieur (31) muni d'un piston (6), un réseau de capillaires inférieurs (4) connecté au canal transversal inférieur (41) et au détecteur (5). Le dispositif comprend également un canal transversal secondaire (7) pour faciliter la circulation des flux lors des étapes d'hybridation et/ou de lavage.
La figure 3 est une vue détaillée de la connexion du canal transversal inférieur (41) comprenant l'électrode du canal inférieur (42), une pipette pietzo-électrique (43), l'électrospray (44) et le détecteur.
La figure 4 représente les polarités des électrodes lors de l'étape de dénaturation de cibles moléculaires chargées négativement à l'aide d'un dispositif muni d'un piston. Le piston métallique (6) est couvert d'électrodes chargées négativement. La solution dénaturante est introduite à extrémité libre du canal transversal supérieur (31), les flèches indiquent le sens de circulation du flux. Les électrodes sont positives au niveau des micro-colonnes (+) et négatives en sortie des micro-colonnes (-).
La figure 5 représente les polarités des électrodes lors de l'étape de migration des cibles moléculaires de la première ligne. La différence de potentiel électrique au niveau des électrodes de la première ligne est supprimée. Le canal transversal inférieur (41) est rempli de gel. Le dispositif comprend également un canal transversal secondaire (7).
La figure 6 illustre l'étape de dénaturation de cibles moléculaires chargées dans le dispositif utilisant des réservoirs (8) de tampons dénaturant contenant un agent cahotrope capable de migrer dans un champ électrique.
La figure 7 illustre un exemple d'un jeu d'électrodes fonctionnalisées et greffées de sondes.
   Les électrodes en or ou en ITO sont gravées sur une lame de verre.
   Les dépôts de sondes (spot ou unité d'hybridation) sont effectués selon le cas sur les électrodes ou entre les électrodes. Dans le procédé, seule l'utilisation des dépôts sur les électrodes sera décrite.
La figure 8 illustre un assemblage des couples d'électrodes lignes.
   Les couples d'électrodes lignes sont obtenus en disposant deux lames gravées d'électrodes en vis-à-vis. Une des lames est fonctionnalisée, l'autre ne l'est pas.
La figure 9 illustre un réseau de capillaires à intercaler entre les deux jeux d'électrodes fonctionnalisées et non fonctionnalisées.
La figure 10 illustre un jeu d'électrodes fonctionnalisées, complété par les électrodes courbes de liaison et les électrodes de réservoir.
La figure 11 illustre un assemblage des deux jeux d'électrodes fonctionnalisées et non fonctionnalisés autour du réseau de capillaires.
La figure 12 illustre une séquence de charges appliquées aux électrodes pour faire migrer séquentiellement les cibles d'une électrode à l'autre, donc d'un spot à l'autre.
La figure 13 illustre des loges semi-ouvertes avec un plancher constitué par les électrodes fonctionnalisées.
   Elles s'ouvrent dans les capillaires du réseau de capillaires. Ces loges évitent la dispersion des cibles par diffusion.
La figure 14 illustre une variante du dispositif avec un seul réseau de capillaire.
   Le deuxième réservoir est supprimé au profit d'un canal transversal et d'un système de retard.
   La deuxième électrode de liaison (V) est rectiligne. Elle sert à délimiter une frontière électrostatique infranchissable pour des cibles chargées. Lorsque l'électrode (V) est saillante par rapport au canal transversal (W), l'effet du retard est amplifié. La deuxième électrode de liaison permet de déplacer sélectivement les sondes dans le canal transversal.
La figure 15 illustre un dispositif pour une détection SPR in situ.
   Un prisme trièdre est accolé au dos de l'électrode non fonctionnalisée.
La figure 16 illustre un principe de détection par SPR sur l'électrode non fonctionnalisée.
   1) Les cibles déshybridées sont maintenues en place par le champ électrique.
   2) Les cibles migrent grâce au champ jusqu'à l'électrode non fonctionnalisée
   3) La détection SPR a lieu.
   4) Le courant peut être alternativement coupé pour améliorer la détection.
La figure 17 illustre un dispositif de deux jeux d'électrodes croisées et superposées pour réaliser les mesures d'impédance.
La figure 18 illustre un quadrillage remplaçant le jeu d'électrodes fonctionnalisées pour les mesures d'impédance en courant discontinu.

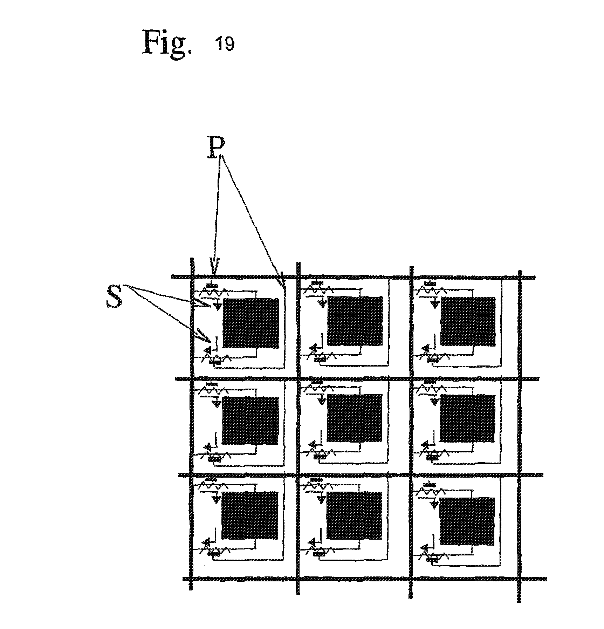

La figure 19 illustre un quadrillage remplaçant le jeu d'électrodes fonctionnalisées pour les mesures d'impédance en courant alternatif.

### EXEMPLES

### 1. Exemple de dispositif pour détecter des molécules d'ADN ou d'ARN contenues dans un échantillon biologique

### 1.A La matrice de micro-colonnes

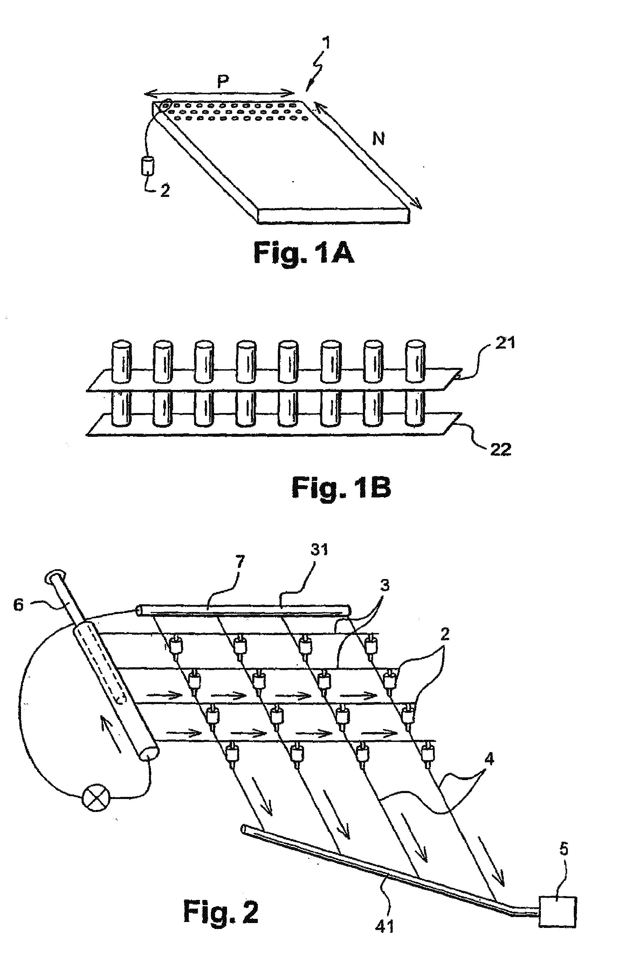

La matrice de micro-colonnes (1) est constituée de N lignes et de P colonnes de micro-colonnes de 50 µm de diamètre et de 100 µm de longueur, creusées ou moulées dans l'épaisseur d'un matériau de type verre, silicium ou plastique (figure 1A). Les loges sont perpendiculaires au plan principal de la puce. Chaque loge est remplie d'un gel de polyacrylamide et les sondes moléculaires spécifiques sont immobilisées à des particules dont le diamètre est supérieur au maillage du gel. Les loges de chaque ligne de la matrice de micro-colonnes sont reliées par une électrode commune, formant une électrode ligne loge (21). Cette électrode est constituée d'une mince couche d'or, médiante aux loges séparant chacune d'elle en deux demi loges. Un deuxième jeu d'électrode, miroir des électrodes lignes médiantes, est disposé en sortie des loges de la matrice de micro-colonne, il s'agit des électrodes ligne distale (22). Chaque électrode ligne distale est parallèle à une électrode ligne médiante formant des couples d'électrodes lignes (figure 1 B). Ces couples d'électrodes permettent d'appliquer le potentiel souhaité au niveau de chaque ligne de loges. Les électrodes distales sont réalisées de la même manière que les électrodes médiantes.

### 1.B Le réseau de capillaires étagés

Chaque loge est connectée par deux canaux aux deux réseaux étagés de capillaires situés respectivement au-dessus et en dessous du plan des loges (voir figure 2) : Le réseau supérieur de capillaires est constitué de N capillaires parallèles (capillaires supérieurs) (3), le réseau inférieur est constitué de P capillaires parallèles (capillaires inférieurs) (4), la disposition N / P peut bien entendu être inversé entre les deux étages de capillaires. Un même capillaire du réseau supérieur est connecté au P loges d'une ligne de la matrice de micro-colonnes, respectivement un même capillaire du réseau inférieur est connecté aux N loges d'une colonne de la matrice de micro-colonne. Les connexions sont réalisées par les canaux de connexions décrits ci-dessus, telles que la direction entre les deux réseaux de capillaires inférieur et supérieur soit perpendiculaire. De ce fait chaque capillaire du réseau supérieur est connecté avec tous les capillaires du réseau inférieur par une ligne de P loges de la matrice de micro-colonne. Réciproquement, chaque capillaire du réseau inférieur est connecté à tous les capillaires du réseau supérieur par une colonne de N loges de la matrice de micro-colonne.

Les capillaires ont un diamètre compris entre 1 et 100 µm. L'ensemble des capillaires du réseau supérieur débouche dans un capillaire transversal (31) (canal transversal supérieur) d'un diamètre compris entre 2 et 1000 µm. Le canal transversal supérieur relie donc tous les capillaires du réseau supérieur, il est perpendiculaire à la direction du réseau supérieur. Les extrémités des capillaires du réseau supérieur opposées au canal transversal, s'arrêtent à la dernière connexion avec les P ièmes et dernières loges des lignes de loge de la matrice de micro-colonnes. L'ensemble des capillaires du réseau inférieur débouche dans un capillaire transversal (41) (canal transversal inférieur) d'un diamètre compris entre 2 et 1000 µm. Le canal transversal inférieur relie donc tous les capillaires du réseau inférieur. Les capillaires du réseau inférieur sont réalisés tel que le parcours compris entre la connexion avec la première loge d'une colonne de loge et le canal transversal inférieur est de longueur différente d'un capillaire inférieur à l'autre. Cette portion d'un capillaire du réseau inférieur est appelée retard. Le retard est obtenu en réalisant un canal transversal inférieur faisant un angle différent de 90° avec le réseau de capillaire inférieur. Selon l'angle choisi, les retards sont croissants ou décroissants entre les capillaires inférieurs successifs.

L'extrémité des capillaires du réseau de capillaires inférieurs opposés au canal transversal, est reliée à un deuxième capillaire transversal (7) (canal transversal inférieur secondaire), permettant l'établissement d'un flux entre les deux réseaux de capillaires inférieur et supérieur à travers la matrice de loge. Le canal transversal inférieur principal est rempli d'un gel liquide d'électrophorèse capillaire afin de réaliser à ce niveau une électrophorèse capillaire, il est alors possible d'établir un flux en cycle fermé entre le canal transversal supérieur et le canal transversal inférieur secondaire (figure 2).

Des électrodes sont disposées au niveau des canaux transversaux supérieur et inférieur.

Le canal transversal supérieur est muni d'un piston (6) fileté ou non, qui peut permettre de sélectionner le nombre de lignes de loges à travers lesquels le flux passera. En reculant, le piston mobilise de plus en plus de lignes de loges de la matrice de micro-colonnes.

### 1.C Détecteur.

La détection des molécules en sortie du canal transversal inférieur est réalisée au moyen d'un spectromètre de masse (5).

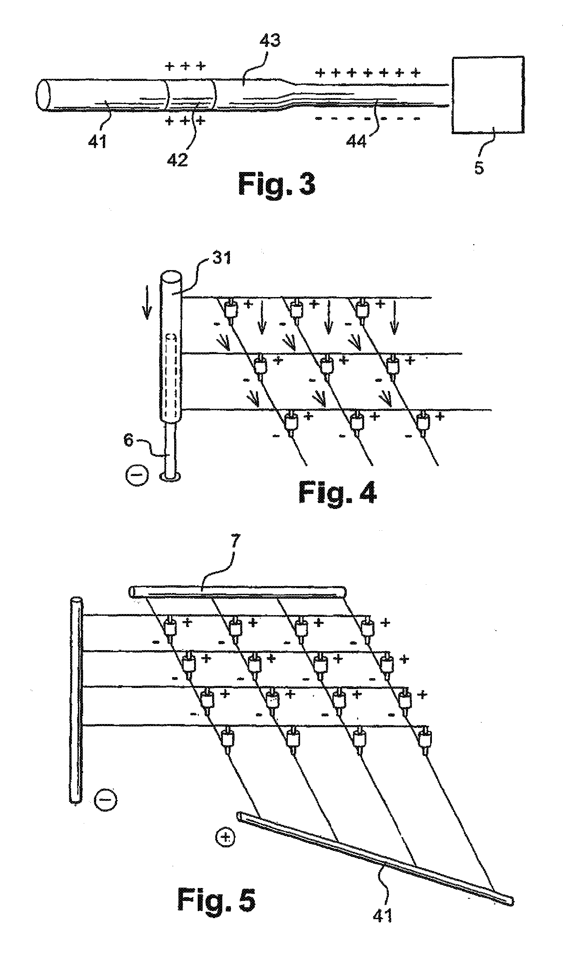

Le canal transversal inférieur est contigu à l'ElectroSpray Ionisation (ESI) (44) d'un spectromètre de masse (figure 3). Il est connecté au détecteur via une pipette pietzo électrique (43) ou thermique qui permet une injection régulière dans l'ElectroSpray.

### 2. Exemple 2 d'un dispositif sans piston

L'exemple qui suit illustre un autre mode de réalisation du dispositif selon l'invention adapté pour la séparation et l'analyse de molécules d'acides nucléiques contenue dans un échantillon biologique et permettant la dénaturation des cibles moléculaires retenues sur les micro-colonnes et leur migration au détecteur uniquement par l'utilisation de champs électriques.

La matrice de micro-colonnes et le réseau de capillaires sont sensiblement identiques à l'exemple 1 à l'exception des différences ci-après :

Le dispositif ne comprend pas de piston au niveau du canal transversal supérieur. En revanche, le canal transversal inférieur et le canal transversal supérieur sont reliés à des réservoirs de tampon dénaturant contenant un sel d'hydroxyde d'ammonium (NH₄OH).

### 3. Exemple 3, préparation d'une micro-colonne contenant un ensemble d'acides nucléiques représentatifs d'un transcriptome et son utilisation pour l'analyse d'un transcriptome

Chaque micro-colonne du dispositif de l'invention, tel que par exemple celui décrit en exemple 1 ou 2, comprend un support ou des particules sur lesquelles sont immobilisées l'ensemble des acides nucléiques représentatifs d'un transcriptome à analyser (ADN, ARN ou oligonucléotide...).

Pour éviter la présence de queue polyA de grande taille, la rétrotranscription de l'échantillon d'ARN messagers à analyser est effectué à partir d'amorces telles que 5'(T)₁₉X3' où X peut être A, C ou G. La rétrotranscription s'effectue ainsi à partir du premier nucléotide différent de A rencontré après la queue polyA.

Pour obtenir un échantillon d'ADNc représentatif du génome fixé sur un support ou une particule, les amorces décrites ci-dessus sont préalablement fixées sur ledit support ou lesdites particules, avant la rétrotranscription. Les produits de rétrotranscription peuvent être également greffés après la rétrotranscription sur le support. Le greffage peut être assuré par des couplages biotine-avidine en utilisant des amorces 5'(T)₁₉X3' biotinylées en 5' (il est également possible d'utiliser une complexation chimique entre les particules et les cibles).

L'invention concerne un dispositif pour séparer et/ou détecter plusieurs cibles moléculaires en solution dans un mélange complexe, ledit dispositif comprenant un jeu de particules magnétiques sur lequel est immobilisé l'ensemble des cibles représentatif d'un transcriptome à analyser, et un jeu de sondes.

Chaque type de sondes du jeu de sondes est spécifique et complémentaire d'un type de cibles pour former un mélange stoechiométrique.

Ces particules ou support contenant un ensemble d'ADNc représentatif d'un génome sont ensuite disposés dans une micro-colonne du dispositif de la présente invention. On obtient ainsi une puce à micro-colonne, dont chaque micro-colonne permet d'analyser un transcriptome, selon le procédé suivant :
Le dispositif est utilisé avec un jeu de sondes où chaque type de sondes composant le mélange est spécifique et complémentaire d'un type de cibles et d'un seul parmi les types de cibles immobilisées dans les micro-colonnes, pour former un mélange stoechiométrique.

Chaque type de sonde présent dans le mélange est ainsi identifiable de manière non équivoque par sa masse moléculaire. Cette spécificité de masse moléculaire est obtenue en combinant trois critères : la formule brute, la taille et d'éventuels marquages avec des atomes lourds. La combinaison de ces trois critères permet de produire un nombre astronomique de sondes. Pour une taille de polymère d'ADN égale à M telle que M=n+m+I+j, il est possible de réaliser un nombre de formule brute (Aₙ Cₘ Tₗ Gⱼ) égal à (n+m+l+j)!/(n!*m!*l!*j!).

Les sondes complémentaires s'hybrident spécifiquement aux molécules cibles retenues sur le support ou les particules; il s'agit de l'étape de séparation. Une fois le système rincé et les sondes non hybridées éliminées, les molécules sondes hybridées au niveau du support ou des particules sont dénaturées de manière contrôlée. Il est alors possible d'effectuer une quantification de chaque type de molécules sondes hybridées sur le support ou sur les particules contenant les cibles immobilisées.

Pour minimiser les hybridations non spécifiques, les séquences sont hybridées en présence de petits polymères nucléotidiques (X)n ou X représente A,T,G ou C et N variant de 3 à 7 nucléotides pour former toutes les séquences possibles de n nucléotides.

Ce procédé peut être appliqué également pour les protéines dans le cadre de l'étude d'un protéome. Le mélange de protéines à étudier est fixé sur un support ou sur des particules. Les cibles sont constituées d'anticorps ou de tout autre ligand spécifique, la masse moléculaire de chaque type de sondes permettra leur identification de manière non équivoque.

Pour lever les indéterminations entre différents types de sondes présentant une masse moléculaire identique, les sondes peuvent être couplées avec des molécules inertes qui modifient la masse moléculaire de la sonde. Pour augmenter encore la discrimination de la détection, une chromatographie capillaire est effectuée avant l'injection dans le spectromètre de masse. Cette chromatographie capillaire permet de séparer les sondes selon leur taille. Le spectromètre de masse et l'électrophorèse capillaire sont couplés avec une pipette piezzo électrique.

Une alternative du mode de réalisation précédent consiste à discriminer les sondes en utilisant des marqueurs de fluorescence. Chaque type de sondes est défini de manière non équivoque par sa taille et un marqueur de fluorescence. La combinaison des ces deux critères permet d'atteindre un degré de complexité de l'ordre du millier en combinant par exemple cinq marqueurs de fluorescences différents avec des sondes dont les tailles sont échelonnées entre 20 et 200 bases. Il est bien sûr possible d'augmenter la complexité du mélange de sondes en augmentant la plage de taille autorisée pour les sondes et le nombre de marqueurs de fluorescence utilisés.

Le procédé est décliné pour être utilisé directement en solution en utilisant un jeu de particules magnétiques sur lequel est immobilisé l'ensemble des cibles, représentatif d'un transcriptome à analyser, et un jeu stoechiométrique de sondes comme décrit ci-dessus. Les particules magnétiques servent à isoler les sondes hybridées. En effet, Les particules hybridées sont isolées par un champ magnétique produit par un aimant simple. Une fois le système rincé et les sondes non hybridées éliminées, les sondes hybridées sont déshybridées de manière contrôlée, l'analyse de l'éluat par une des méthodes décrites ci-dessus permet de définir la composition du transcriptome analysé.

Ce procédé se substitue à une puce ADN classique, notamment dans les études du transcriptome et de la CGH (comparative genomic hybridization).

### 4. Exemple 4 : Mise en oeuvre d'une puce à micro-colonne telle que décrite à l'exemple 1 pour l'analyse d'échantillons d'ARN.

Le dispositif décrit dans l'exemple 1 permet d'analyser un mélange de molécules d'acides nucléiques. L'analyse peut être réalisée à partir d'un extrait simple d'ARN cellulaire mais également de deux extraits différents.

Pour l'analyse de deux extraits d'ARN différents avec une détection par spectrométrie de masse, il conviendra de marquer au moins une des deux populations ARNm. Le marquage est réalisé par rétrotranscription avec incorporation d'un isotope lourd. Les isotopes lourds sont choisis parmi: O¹⁸, O¹⁷, N¹⁵, C¹³ , H², ou tout autre isotope lourd pouvant être différencié par la masse de la forme commune. Ces isotopes lourds sont incorporés aux nucléotides entrant dans la synthèse des acides nucléiques. La seconde population d'ARNm à analyser est rétro transcrite en ADNc sans incorporation d'atomes lourds, ou incorporation d'atomes lourds différents de ceux de la première population.

Pour éviter toute confusion avec d'éventuels produits de décomposition, les amorces 5'(T)₁₉X3', où X peut prendre les valeurs A, G ou C, sont marquées avec des atomes lourds, différents de ceux éventuellement utilisés pour le reste de la molécule dans le cas d'une détection par spectromètre de masse. En détection par fluorescence, ces amorces sont marquées par des chromophores.

La rétrotranscription est arrêtée brusquement a un temps précoce, ainsi le temps d'élongation est identique pour tous les ADNc on obtient des molécules d'ADNc dans une échelle de taille resserrée plus facilement identifiable en masse. Ce procédé peut également être utilisé pour la préparation des cibles ADNc utilisables avec des puces à ADN classiques.

Une fois les deux populations d'ADNc obtenues, elles sont mélangées de manière équimolaire (il est également possible de traiter des mélanges hétérogènes ARNm/ADNc). Le mélange est introduit dans un circuit fermé qui circulera plusieurs fois dans chaque micro-colonne (voir figure 2). Durant leur passage dans les micro-colonnes, les cibles s'hybrident aux sondes complémentaires. La circulation à l'intérieur du circuit fermé permet d'homogénéiser le mélange après chaque passage dans les micro-colonnes. Une résistance située au nivaux du tuyau d'admission par exemple permet de réguler la température de la solution d'hybridation, mais également, de réaliser les variations thermiques au cours du cycle d'hybridation, ceci permettant de contrôler la spécificité de l'hybridation. Une chambre de sonication permet éventuellement d'homogénéiser la taille des molécules à hybrider en cassant les ADNc cibles en molécules de plus petites tailles, des sondes constituées d'oligonucléotides (entre 20 et 100 pb) facilitent en effet l'hybridation des cibles de taille équivalente.

Une fois l'hybridation réalisée, le circuit est ouvert et rincé abondamment (étapes de lavages) avec une solution éliminant les molécules non hybridées ou non spécifiquement hybridées.

Le système est alors couplé à l'ElectroSpray d'un spectromètre de masse, et une différence de potentiel électrique est établie entre les couples d'électrodes ligne des micro-colonnes de la matrice, positif au niveau médiant et négatif au niveau distal. De même, une différence de potentiel électrique est établie au niveau des électrodes des canaux transversaux, négatif au niveau du canal transversal supérieur et positif au niveau du canal transversal inférieur. Du fait de la polarité des électrodes, les molécules hybridées sont maintenues dans chaque loge d'hybridation. Le piston est disposé de sorte que la circulation ne puisse se faire entre les deux réseaux supérieur et inférieur que par les micro-colonnes de la première ligne de micro-colonnes de la matrice (figure 4). Une solution dénaturante dont la température est contrôlée par la résistance (située par exemple au niveau du canal transversal supérieur) est alors injectée en flux laminaire et diffuse à travers les micro-colonnes de la première ligne, la plus rapprochée du canal transversal inférieur, le piston empêchant l'accès aux autres lignes de micro-colonnes. L'agent dénaturant dénature les complexes sondes-cibles, le champ électrique empêche la diffusion des cibles hors des loges.

La dénaturation thermique est également envisageable en alternative. En augmentant la température du tampon dans chaque micro-colonne, la dénaturation du duplex formé entre la sonde fixe et la cible se produit et la cible repasse en solution alors que la sonde demeure fixée sur la matrice.

Le champ électrique entre le couple d'électrodes de la première ligne est ensuite inversé ou simplement coupé, la différence de potentiel électrique entre le couple d'électrodes des canaux transversaux est maintenue (figure 5). Les cibles de chaque micro-colonne de la première ligne passent alors dans les capillaires correspondants du réseau inférieur, les sondes sont transportées ou migrent par électrophorèse à travers ces capillaires jusqu'au canal transversal inférieur. Les cibles des différentes micro-colonnes arrivent avec des temps différents dans le canal inférieur transversal en fonction des retards respectifs des capillaires du réseau inférieur. De fait, les différentes cibles arrivent dans les capillaires du détecteur (ElectroSpray) couplé au canal transversal inférieur avec des temps différents pour l'analyse. Pour qu'il n'y ait pas de mélange entre les cibles provenant de micro-colonnes différentes, il est en général nécessaire de travailler en flux laminaire très lent. L'utilisation de plusieurs sondes par microcolonnes permet de déterminer toutes les formes d'épissage du gène.

### 5. Exemple 5 : Mise en oeuvre d'une puce à micro-colonne telle que décrite à l'exemple 2 pour l'analyse d'échantillons d'ARN.

Dans le procédé qui suit, aucune mise en circulation des fluides dans les capillaires n'est nécessaire pour la dénaturation des cibles et leur migration vers le spectromètre de masse.

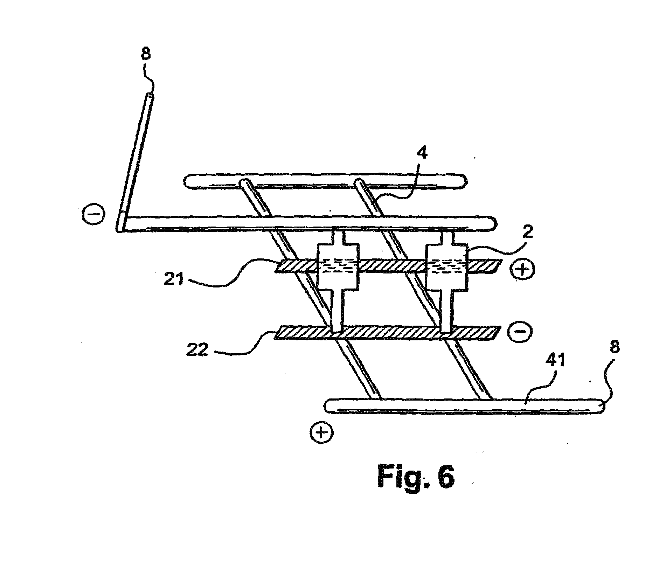

Dans ce procédé, on utilisera le dispositif décrit à l'exemple 2. La mise en oeuvre des étapes d'hybridation et de rinçage est identique à celle décrite en exemple 4. Après hybridation et rinçage, le canal transversal supérieur est relié au réservoir de tampon contenant l'agent chaotrope capable de migrer dans un champ électrique tampon, le canal transversal inférieur est connecté au deuxième réservoir contenant le même tampon. Les électrodes du canal transversal supérieur et inférieur ainsi que les électrodes lignes distales sont maintenues à un potentiel négatif par rapport aux électrodes lignes médiantes qui sont maintenues à un potentiel positif. La migration des ions et des agents chaotiques, à l'anode et à la cathode, le pH du tampon, ainsi que la différence de potentiel, entraînent la dénaturation des complexes de biopolymères sondes-cibles (figure 6).

Les sondes restent fixées sur la matrice du fait de la liaison forte avec celle-ci, les cibles chargées négativement et libres restent également au niveau des électrodes ligne médiantes chargées positivement. Une fois les complexes sonde/cible dénaturés, les électrodes des canaux transversaux sont portées à un différentiel électrique, négatif pour celle du canal transversal supérieur et positif pour celle du canal inférieur, le potentiel électrique étant maintenu positif pour les électrodes médiantes et négatives pour les distales, les cibles sont donc confinées dans une chambre électrostatique dans chaque micro-colonne interdisant toute migration.

Les différences de potentiels entre les électrodes lignes de la matrice de micro-colonne sont alors successivement annulées ligne par ligne entraînant la migration successive des cibles de chaque ligne dans les capillaires du réseau inférieur correspondant par électrophorèse. Les cibles migrent jusqu'au canal transversal inférieur en fonction des distances de parcours respectives de leur capillaire. En sortie du canal transversal inférieur, l'analyse est effectuée.

### 6. Exemple 6 : Micro-séquençage des bio-polymère séparés et isolés dans chaque microcolonne

Les procédés de l'invention permettent le séquençage des cibles d'acides nucléiques ou de protéines séparées et analysées dans le spectromètre de masse.

Le micro-séquençage consiste à effectuer des clivages aléatoires dans la séquence d'acide nucléique puis à identifier les produit résultants par spectromètre de masse. Les clivages aléatoires peuvent être chimiques, physiques, mécaniques ou enzymatiques. Par exemple les coupures enzymatiques pourront être obtenues par l'action d'un mélange enzymatique constitué d'enzymes fixés dans une micro-colonne, cette micro-colonne étant disposée par exemple entre le capillaire de la détection et le canal transversal inférieur. Lorsque les biopolymères traversent cette micro-colonne, ils sont partiellement dégradés. L'analyse des produits de dégradation permet d'en déduire la séquence. Les enzymes, telles que les endo-nucléases pour les acides nucléiques, ou endo-peptidase pour les protéines, permettent par exemple d'obtenir les coupures aléatoires dans ces bio-polymères. L'usage d'exonucleases pour les acides nucléiques et d'exopeptidases pour les protéines permet des digestions partielles. L'analyse des produits des ces réactions permet d'obtenir la séquence des bio-polymères retenus spécifiquement dans chacune des micro-colonnes. Les clivages chimiques sont obtenus par dégradation chimique ménagée des bio-polymères en utilisant un acide, une base ou tout autre produit chimique.

Les dégradations mécaniques sont obtenues par exemple par l'utilisation des ultra-sons, des micro-ondes ou des micro-fréquences capables de segmenter les bio-polymères. Enfin, les décompositions physiques peuvent être obtenues par un flux d'électrons ou par un bombardement d'atomes lourds qui interagiront avec le bio-polymère. L'ensemble de ces traitements permet de fracturer le bio-polymère selon des combinaisons qui peuvent être prédites, comme la rupture des liaisons phosphates pour les acides nucléiques et des liaisons peptiques pour les protéines. Les traitements seront ménagés pour n'induire statistiquement qu'une coupure aléatoire par molécule. Afin de déterminer la séquence des bio-polymères, il est nécessaire de disposer d'un marqueur à au moins une de leurs extrémités. L'étude de tous les ions de décomposition obtenue comprenant ce marqueur permet d'établir la séquence. Soit le marqueur d'extrémité existe à l'état naturel dans le bio-polymère soit, il est artificiellement introduit. Par exemple les extrémités 3' des ARNm comportent systématiquement une queue poly A. Cette queue poly A peu servir de marqueurs d'extrémité : Les ADNc sont obtenus par rétrotranscription avec des amorces telles que 5'(T)₁₉X3' où X peut être A, C ou G. La rétrotranscription s'effectue ainsi à partir du premier nucléotide différent de A rencontré après la queue polyA. Pour éviter toute confusion avec d'éventuels produits de décomposition, les amorces 5'(T)₁₉X3' seront marquées avec des atomes lourds, différents de ceux éventuellement utilisés pour le reste de la molécule. Connaissant la masse exacte du marqueur, il sera facile de déduire des produits de clivages, la succession des résidus dans la séquence. Dans le cas, des protéines, le marquage de l'extrémité N terminale par des composés tels que le phenyl isothiocyanate, le 1-fluoro-2-4 dinitro benzene ou le chlorure de densyle, permet de déterminer la séquence. Il est également possible d'effectuer un double marquage de du bio-polymère à chacune de ses extrémités pour augmenter le pouvoir de résolution de la méthode. Dans les cas complexes, les méthodes de MSMS permettent de choisir les ions moléculaires à analyser en seconde étape comme par exemple dans le cas de protéines multimériques. Enfin, il est possible de déterminer la séquence des bio-polymères directement par l'analyse des produits de décomposition successive, telle que le permet les méthodes de MSMS, les marqueurs d'extrémités de séquences étant déterminés à l'aide des extrémités N terminal et C terminal pour les protéines par exemple.

### 7. Mise en oeuvre d'une puce à micro-colonne pour l'analyse de mélanges de polypeptides

Les dispositifs sont réalisés de manière similaire à ceux décrits en exemple 1 ou 2. Chaque micro-colonne de la matrice est remplie d'anticorps spécifique d'un type de polypeptide. Les anticorps sont spécifiques de protéines natives ou dénaturées. Les anticorps sont directement fixés à la paroi des loges ou à des particules retenues dans chaque loge. Comme pour les acides nucléiques, il sera possible d'utiliser des anticorps liés à une molécule de pyrol. L'ensemble des procédés appliqués pour les sondes liées au pyrole décrits pour les acides nucléiques sont appliqués pour les anticorps liés au pyrole. Les extraits cellulaires de polypeptides sont mis à complexer en réalisant un circuit fermé avec les réseaux de micro-colonnes. Ceci permet la formation de complexes spécifiques antigène/anticorps au niveau de chaque micro-colonne. Pour éluer les polypeptides retenus dans chaque micro-colonne, il est nécessaire d'utiliser des tampons permettant la migration des protéines, uniquement en fonction de leurs tailles. Ces tampons permettent également de détruire le complexe anticorps/antigène. A cet effet, on citera les tampons à base de SDS (sodium dodecyle sulfate) qui permettent de faire migrer toutes les protéines vers les pôles positifs, quel que soit leur point iso-électrique.

La présente demande décrit un premier dispositif pour séparer et/ou détecter plusieurs cibles moléculaires en solution dans un mélange complexe, ledit dispositif comprenant
a. une matrice de micro-colonnes comprenant N lignes et P colonnes de micro-colonnes disposées dans un même plan, chaque micro-colonne comportant un type de sonde moléculaire immobilisée susceptible de retenir une cible moléculaire spécifique présente dans le mélange complexe, par liaison spécifique sonde/cible,
b. un premier réseau de capillaires situé dans un plan parallèle au plan de la matrice de micro-colonnes, au dessus de la matrice de micro-colonnes, ledit premier réseau permettant la circulation du mélange complexe introduit dans le dispositif vers chaque micro-colonne de la matrice telle que définie en a,
c. un second réseau de capillaires situé dans un plan parallèle au plan de la matrice de micro-colonnes, en dessous de la matrice de micro-colonnes, ledit second réseau permettant la circulation des cibles moléculaires après élution vers un ou plusieurs détecteur(s), permettant leur récupération et/ou leur analyse.
d. Le cas échéant, un détecteur permettant la récupération et/ou l'analyse des différentes cibles moléculaires, de préférence un sprectromètre de masse.

Le dispositif peut comprendre en plus un ou plusieurs détecteur(s) permettant la récupération et/ou l'analyse des différentes cibles moléculaires.

Chaque micro-colonne peut comprendre une loge de forme tubulaire ayant un diamètre de 2 à 1000 µm, de préférence environ de 20 à 100 µm, et une longueur de 2 à 2000 µm, de préférence de 40 à 200 µm. Dans ce cas, la matrice de micro-colonnes peut comprendre des loges moulées ou creusées dans l'épaisseur d'un matériau formant le plan de la matrice.

Chaque réseau de capillaires peut être creusé dans l'épaisseur d'une plaque d'un matériau approprié.

La matrice peut être constituée de 1 à un million de micro-colonnes, de préférence de 100 à 100000 micro-colonnes.

Les sondes moléculaires peuvent être immobilisées sur la paroi interne des micro-colonnes.

Chaque micro-colonne peut contenir des particules auxquelles sont couplées les sondes moléculaires, lesdites particules étant retenues dans chaque loge par des moyens appropriés. Dans ce cas, les particules auxquelles sont couplées les sondes moléculaires peuvent être d'un diamètre supérieur au diamètre des capillaires à l'entrée et à la sortie de chaque micro-colonne.

Chaque micro-colonne peut être constituée d'une loge contenant un gel dans lequel les sondes moléculaires sont immobilisées, empêchant la migration desdites sondes moléculaires hors de la loge. Dans ce cas, les sondes moléculaires peuvent être couplées à des particules d'un diamètre supérieur au maillage du gel, empêchant leur migration hors de la loge. Alternativement, des filtres peuvent être disposés en entrée et en sortie de chaque loge et les particules peuvent être d'un diamètre supérieur aux diamètres des pores desdits filtres.

Le dispositif peut comprendre des moyens permettant de contrôler au niveau d'une ou plusieurs micro-colonnes spécifiques de la matrice, l'élution des cibles moléculaires et/ou leur migration vers un détecteur et/ou leur rétention dans les micro-colonnes après élution. Dans ce cas, le dispositif peut comprendre une électrode, dite électrode loge, disposée au contact de chaque micro-colonne, de préférence médiante à la micro-colonne, et une deuxième électrode, dite électrode distale, disposée en sortie de chaque micro-colonne, permettant le contrôle de l'élution des cibles moléculaires retenues dans une ou plusieurs micro-colonnes spécifiques et/ou leur migration vers un détecteur ou leur rétention dans les micro-colonnes après élution (point I, voir ci-dessus). Le premier réseau de capillaires du dispositif peut comprendre un premier capillaire transversal dans lequel est introduit le mélange complexe, appelé ci-après canal transversal supérieur, d'un diamètre de préférence compris entre 2 et 1000 µm, connecté à un ensemble de capillaires desservant les micro-colonnes de la matrice et le second réseau de capillaires peut comprendre un ensemble de capillaires reliant chaque micro-colonne à un second capillaire transversal, appelé canal transversal inférieur, d'un diamètre de préférence compris entre 2 et 1000 µm, ledit canal transversal inférieur étant relié à une électrode et ledit canal transversal supérieur étant relié à une électrode (point I, voir ci-dessus). Dans ce dernier cas, le dispositif peut comprendre des moyens permettant de contrôler l'élution des cibles moléculaires retenues sur les micro-colonnes d'une ligne spécifique et/ou leur migration vers un détecteur et/ou leur rétention dans les micro-colonnes après élution, et la longueur de chaque capillaire du second réseau peut être choisie de façon à ce que la distance entre la sortie d'une micro-colonne et le canal transversal inférieur est différente d'un capillaire du second réseau à l'autre, de préférence croissante ou décroissante du capillaire reliant la première micro-colonne d'une ligne au capillaire reliant à la dernière micro-colonne de cette ligne, de sorte que les temps de parcours des cibles moléculaires en sortie de micro-colonne jusqu'à un détecteur sont différents pour chaque micro-colonne d'une même ligne (point I, voir ci-dessus). Dans ce dernier cas, le réseau de capillaires reliant chaque micro-colonne au canal transversal inférieur peut comprendre P capillaires parallèles, chaque capillaire reliant les N micro-colonnes d'une même colonne de la matrice au canal transversal inférieur et formant un angle avec ledit canal transversal inférieur différent de 90° (point I, voir ci-dessus). Dans le dernier ou l'avant-dernier cas, le dispositif peut comprendre, pour chaque ligne, une électrode reliant l'ensemble des P micro-colonnes d'une même ligne, formant ainsi N électrodes lignes, de préférence médiantes aux micro-colonnes, et une deuxième série d'électrodes, parallèles aux électrodes lignes, reliant l'ensemble des P capillaires en sortie des micro-colonnes d'une même ligne, permettant de contrôler l'élution et/ou la migration des cibles pour chaque ligne de micro-colonne (points I et II, voir ci-dessous). Dans les trois derniers cas, le premier réseau de capillaires, appelé réseau supérieur peut comprendre N capillaires parallèles, chaque capillaire reliant le capillaire transversal supérieur aux P micro-colonnes d'une même ligne de la matrice, et le second réseau de capillaires, appelé réseau inférieur peut comprendre P capillaires parallèles, chaque capillaire reliant les N micro-colonnes d'une même colonne de la matrice au capillaire transversal inférieur, l'angle formé entre les deux réseaux de capillaires inférieurs et supérieurs étant différent de 0°, de préférence perpendiculaire (point II, voir ci-dessous). Dans ce dernier cas, le canal transversal connecté au réseau supérieur peut être associé à un piston permettant la circulation d'un mélange introduit dans le canal transversal supérieur dans un ou plusieurs capillaires spécifiques du réseau supérieur (point II, voir ci-dessous).

Le dispositif peut comprendre un dispositif de détection constitué d'un spectromètre de masse.

Les sondes moléculaires du dispositif peuvent être des acides nucléiques, de préférence des oligonucléotides ou des fragments d'ADN. Dans ce cas, les sondes moléculaires peuvent être constituées pour chaque micro-colonne d'un type d'acide nucléique spécifique d'un gène. Dans l'un ou l'autre de ces cas, chaque micro-colonnes peut comprendre un ensemble d'acides nucléiques, représentatif d'un transcriptome (point III, voir ci-dessous). Dans ce dernier cas, l'ensemble d'acides nucléiques représentatif d'un transcriptome peut être immobilisé à des particules, lesdites particules étant immobilisées dans les micro-colonnes par des moyens appropriés (point III, voir ci-dessous).

Les sondes du dispositif peuvent être des polypeptides, de préférence des fragments d'anticorps.

La présente demande décrit également un second dispositif pour séparer et/ou détecter plusieurs cibles moléculaires en solution dans un mélange complexe, ledit dispositif comprenant
a. un réseau de capillaires permettant la circulation du mélange complexe introduit dans le dispositif,
b. deux jeux d'électrodes disposés de part et d'autre du réseau de capillaires :
   - un jeu d'électrodes fonctionnalisées, dont les électrodes sont greffées de sondes organisées en spots, chaque sonde étant susceptible de retenir une cible moléculaire spécifique présente dans le mélange complexe, par liaison spécifique sonde/cible,
   - un jeu d'électrodes non fonctionnalisées.

Le jeu d'électrodes fonctionnalisées de ce second dispositif peut être situé au-dessus du réseau de capillaires et le jeu d'électrodes non fonctionnalisées peut être situé en-dessous du réseau de capillaires.

Le second dispositif peut comporter en outre un réservoir à chaque extrémité du réseau de capillaires. Ce réservoir peut comporter une électrode circulaire. Cette électrode circulaire contenue dans chaque réservoir peut être située dans le même plan que celui du jeu d'électrodes fonctionnalisées.

Le second dispositif peut comporter en outre une première et une deuxième électrodes de liaison supplémentaires situées respectivement entre la première électrode de réservoir et la première électrode fonctionnalisée, et entre la deuxième électrode de réservoir et la dernière électrode fonctionnalisée, de telle sorte que les distances les plus courtes entre l'électrode de liaison et l'électrode réservoir soient identiques en tout point des électrodes. Dans ce cas, la première électrode de liaison peut être courbe, et la deuxième électrode de liaison peut être non courbe, de telle sorte que cette électrode serve de frontière électrique infranchissable par les sondes lors de l'hybridation, puis à l'étape de la détection permettra de diriger les cibles vers le système de retard à l'aide des potentiels établis par l'électrode cible et l'électrode de liaison

La présente demande décrit également un premier procédé de séparation et de dosage de cibles moléculaires contenues dans un mélange complexe, ledit procédé comprenant :
a. l'introduction d'un mélange complexe contenant les cibles moléculaires à séparer dans un premier dispositif du type précité,
b. la circulation du mélange complexe à travers la matrice de micro-colonnes du dispositif dans des conditions appropriées pour permettre une liaison spécifique des cibles sur les sondes des micro-colonnes,
c. l'élution des cibles retenues spécifiquement sur les sondes des micro-colonnes,
d. la circulation des cibles éluées des micro-colonnes vers un détecteur,
e. la récupération et/ou l'analyse de chaque cible au moyen d'un détecteur.

La présente demande décrit en outre un second procédé pour l'analyse comparative de deux populations de molécules d'ADN ou ARN spécifiques contenues dans deux échantillons biologiques, ledit procédé comprenant :
a. le marquage des molécules d'ADN ou d'ARN issues du premier échantillon, par exemple avec un isotope lourd, de sorte à différencier la masse d'une molécule marquée d'ADN ou d'ARN contenue dans le premier échantillon de celle d'une molécule d'ADN ou d'ARN de structure identique mais non marquée contenue dans le second échantillon;
b. le mélange équimolaire des deux populations d'ADN ou d'ARN à comparer ;
c. l'introduction du mélange équimolaire dans un premier dispositif d'un des types décrits au point I ci-dessus, pour séparer et/ou détecter plusieurs cibles moléculaires en solution dans un mélange complexe et comprenant un détecteur constitué d'un spectromètre de masse,
d. la circulation du mélange équimolaire à travers la matrice de micro-colonnes du dispositif dans des conditions appropriées pour permettre une liaison spécifique des cibles sur les sondes des micro-colonnes,
e. l'élution des cibles retenues spécifiquement sur les sondes des micro-colonnes,
f. la circulation des cibles éluées des micro-colonnes vers le spectromètre de masse,
g. le cas échéant la séparation des cibles éluées par chromatographie capillaire dans le canal transversal inférieur,
h. la détection et/ou le dosage de chaque cible, marquée ou non marquée, au moyen du spectromètre de masse.

L'un ou l'autre des premier et second procédés peut comprendre :
a. l'introduction d'un mélange complexe contenant les molécules d'ADN et/ou ARN à séparer dans un premier dispositif d'un des types décrits au point II ci-dessus,
b. a circulation du mélange complexe à travers la matrice de micro-colonnes du dispositif dans des conditions appropriées pour permettre une liaison spécifique des cibles sur les sondes des micro-colonnes, de préférence en circuit fermé,
c. le cas échéant, la circulation à travers la matrice de micro-colonnes d'une solution de lavage permettant l'élimination des molécules non hybridées ou non spécifiquement hybridées, en circuit ouvert,
d. l'application d'une différence de potentiel électrique entre les couples d'électrodes lignes des micro-colonnes, positif au niveau des électrodes loges et négatif au niveau des électrodes distales, et l'application d'une différence de potentiel électrique entre les couples d'électrodes des canaux transversaux, négatif au niveau du canal transversal inférieur, et positif au niveau du canal transversal supérieur, de sorte que les molécules d'ADN ou d'ARN sont retenues dans chaque micro-colonne après dénaturation à l'étape e,
e. la circulation d'une solution dénaturante, à travers une ou plusieurs lignes de la matrice de micro-colonnes dans des conditions permettant la dénaturation des complexes sondes/cibles et donc l'élution des molécules d'ADN ou d'ARN,
f. l'inversion ou la suppression du différentiel électrique appliqué au niveau du couple d'électrodes lignes d'une ligne de micro-colonne de la matrice,
g. la circulation des cibles éluées des microcolonnes d'une ligne de la matrice vers un détecteur,
h. la récupération et/ou l'analyse de chaque cible au moyen d'un détecteur.

Dans le cas du second procédé ou de ce dernier cas, le procédé peut comprendre :
a. l'introduction d'un mélange complexe contenant les molécules d'ADN et/ou d'ARN à séparer dans un premier dispositif d'un des types décrits au point II ci-dessus,
b. la circulation du mélange complexe à travers la matrice de micro-colonnes du dispositif dans des conditions appropriées pour permettre une liaison spécifique des cibles sur les sondes des micro-colonnes, de préférence en circuit fermé,
c. le cas échéant, la circulation à travers la matrice de micro-colonnes d'une solution de lavage permettant l'élimination des molécules non hybridées ou non spécifiquement hybridées, en circuit ouvert,
d. la connexion du canal transversal inférieur à un premier réservoir contenant une solution dénaturante comprenant des ions négatifs capables de migrer dans un champ électrique et la connexion du canal transversal supérieur à un second réservoir comprenant une solution dénaturante comprenant les mêmes ions négatifs,
e. l'application d'un potentiel électrique négatif au niveau des canaux transversaux inférieurs et supérieurs et des électrodes lignes distales, et d'un potentiel électrique positif au niveau des électrodes lignes loges, de telle sorte que les ions négatifs de la solution migrent vers les micro-colonnes chargées positivement et entraînent la dénaturation des cibles moléculaires,
f. l'application d'une différence de potentiel électrique entre les couples d'électrodes des canaux transversaux, négatif au niveau du canal transversal supérieur, et positif au niveau du canal transversal inférieur,
g. l'inversion ou la suppression du différentiel électrique appliqué au niveau du couple d'électrodes lignes d'une ligne de micro-colonne de la matrice, de façon à permettre la migration par électrophorèse des cibles dénaturées des micro-colonnes d'une ligne de la matrice vers un détecteur,
h. la récupération et/ou l'analyse de chaque cible au moyen d'un détecteur.

Dans l'un ou l'autre des deux derniers cas, le procédé peut comprendre :
a. la constitution d'un premier dispositif d'un des types décrits au point III ci-dessus, dans lequel chaque micro-colonne contient des cibles d'ARN ou d'ADN dans des proportions représentatives d'un transcriptome,
b. l'introduction d'un mélange stoechiométrique de sondes spécifiquement complémentaires des cibles d'ARN ou d'ADN immobilisées dans chaque micro-colonne de la matrice, chaque sonde spécifique d'une cible étant d'un poids moléculaire différent des autres sondes, et donc identifiable l'une par rapport à l'autre dans un spectromètre de masse,
c. la circulation du mélange de sondes à travers la matrice de micro-colonnes du dispositif dans des conditions appropriées pour permettre une liaison spécifique des sondes sur les cibles des micro-colonnes,
d. l'élution des sondes retenues spécifiquement sur les cibles immobilisées dans les micro-colonnes,
e. la migration des sondes éluées des micro-colonnes vers un détecteur constitué d'un spectromètre de masse,
f. l'analyse de chaque sonde au moyen du spectromètre de masse.

La présente demande décrit encore un procédé de séparation et de dosage de cibles moléculaires contenues dans un mélange complexe, ledit procédé comprenant :
a. l'introduction d'un mélange complexe contenant les cibles moléculaires à séparer dans un second dispositif du type précité,
b. l'application d'un potentiel électrique entre les électrodes de ce dispositif, de façon à ce que les cibles puissent migrer d'une extrémité du réseau de capillaires à l'autre et que les cibles complémentaires des sondes puissent s'hybrider,
c. l'analyse in situ ou la récupération et l'analyse de chaque cible hybridée à une sonde au moyen d'un détecteur.

La présente demande décrit également un procédé de fixation d'un polymère d'acide nucléique sur une électrode en ITO par adsorption directe.

La présente demande décrit enfin un procédé d'analyse de SPR comprenant :
- l'hybridation des cibles sur une électrode,
- la déshybridation par un agent chaotrope,
- le maintien des cibles par un potentiel électrique,
- l'inversion du potentiel pour faire migrer les cibles sur l'électrode non fonctionnalisée, et
- la mesure de la SPR sur l'électrode non fonctionnalisé.

## Revendications

1. Dispositif pour séparer et/ou détecter plusieurs cibles moléculaires en solution dans un mélange complexe, ledit dispositif comprenant
a. un jeu de particules magnétiques sur lesquelles est immobilisé l'ensemble des cibles représentatif d'un transcriptome à analyser, et
b. un jeu de sondes.

2. Dispositif selon la revendication 1, **caractérisé en ce que** chaque type de sondes du jeu de sonde est spécifique et complémentaire d'un type de cible pour former un mélange stoechiométrique lorsqu'elles sont mises en présence desdites cibles.

3. Dispositif selon la revendication 2, **caractérisé en ce que** chaque type de sonde présent dans le mélange est identifiable de manière non équivoque par sa masse moléculaire, laquelle est obtenue en combinant trois critères : la formule brute, la taille et d'éventuels marquages avec des atomes lourds.

4. Dispositif selon la revendication 3, **caractérisé en ce que** chaque type de sonde présent dans le mélange est défini de manière non équivoque par sa taille et un marqueur de fluorescence.

5. Utilisation du dispositif selon l'une quelconque des revendications précédentes, pour la détection et/ou le dosage de molécules d'ARN et/ou d'ADN spécifiques contenues dans un échantillon biologique, notamment un extrait cellulaire, dans laquelle les sondes moléculaires sont choisies de sorte qu'elles hybrident spécifiquement avec un type d'ARN ou ADN contenu dans l'échantillon biologique.

6. Utilisation selon la revendication 5, pour l'analyse comparative de molécules d'ARN et/ou d'ADN spécifiques contenues dans deux échantillons biologiques.

7. Procédé pour l'analyse d'un transcriptome comprenant l'utilisation :
a. d'un jeu de particules magnétiques sur lesquelles est immobilisé l'ensemble des cibles représentatif d'un transcriptome à analyser, et
b. d'un jeu de différents types de sondes, où chaque type de sonde du jeu de sondes est spécifique et complémentaire d'un type de cible pour former un mélange stoechiométrique avec lesdites cibles.

8. Procédé selon la revendication précédente, **caractérisé en ce que** chaque type de sonde présent dans le mélange est identifiable de manière non équivoque par sa masse moléculaire, laquelle est obtenue en combinant trois critères : la formule brute, la taille et d'éventuels marquages avec des atomes lourds.

9. Procédé selon la revendication précédente, **caractérisé en ce que** chaque type de sonde présent dans le mélange est défini de manière non équivoque par sa taille et un marqueur de fluorescence.
